# EUROPEAN PATENT APPLICATION

(11) **EP 4 648 349 A2**
(43) Date of publication of application: **12.11.2025**
(21) Application number: 25204988.7
(22) Date of filing: 11.08.2023
(51) Int. Cl.: H04L 5/14

(54) **MARKING SYMBOLS AND VALIDATION OF NON-CELL-DEFINING SYNCHRONIZATION SIGNAL BLOCK AND RANDOM ACCESS CHANNEL OCCASIONS**

(30) Priority: 12.08.2022 US 202263371283 P; 10.08.2023 US 202318447794
(62) Divisional of application: 23768736.3
(71) Applicant: QUALCOMM Incorporated, San Diego, CA 92121-1714 (US)
(72) Inventor: ISLAM, Nazmul, San Diego, CA, 92121-1714 (US); LEI, Jing, San Diego, CA, 92121-1714 (US); MENON, Murali, San Diego, CA, 92121-1714 (US)
(74) Representative: Bardehle Pagenberg Partnerschaft mbB Patentanwälte Rechtsanwälte

(57) **Abstract**

This disclosure provides systems, methods, and devices for wireless communication that support marking symbols and validation of non-cell-defining-synchronization signal block (NCD-SSB) and random access channel (RACH) occasions within 5G new radio (NR) networks. In a first aspect, a method of wireless communication includes the UE obtaining an uplink-downlink configuration for one or more slots, an NCD-SSB configuration identifying NCD-SSB transmissions, and a bandwidth configuration identifying a bandwidth part (BWP) allocated to the UE and a configuration for cell-defining-synchronization signal block (CD-SSB) transmissions. The UE can mark a configured flexible symbol as a downlink symbol in response to either an NCD-SSB symbol or a CD-SSB symbol overlapping with the flexible symbol. Other aspects and features are also claimed and described.

## Description

### CROSS-REFERENCE TO RELATED APPLICATIONS

This application claims priority to co-pending U.S. Patent Application Number 18/447,794, entitled "MARKING SYMBOLS AND VALIDATION OF NON-CELL-DEFINING SYNCHRONIZATION SIGNAL BLOCK AND RANDOM ACCESS CHANNEL OCCASIONS," filed August 10, 2023, and co-pending U.S. Provisional Application Number 63/371,283, entitled "MARKING SYMBOLS AND VALIDATION OF NON-CELL-DEFINING SYNCHRONIZATION SIGNAL BLOCK AND RANDOM ACCESS CHANNEL OCCASIONS," filed August 12, 2022, both of which are expressly incorporated by reference herein in their entity.

### TECHNICAL FIELD

Aspects of the present disclosure relate generally to wireless communication systems, and more particularly, to 5G NR operations. Some features may enable and provide improved communications, including marking symbols and validation of non-cell-defining-synchronization signal blocks (NCD-SSBs) and random access channel (RACH) occasions.

### INTRODUCTION

Wireless communication networks are widely deployed to provide various communication services such as voice, video, packet data, messaging, broadcast, and the like. These wireless networks may be multiple-access networks capable of supporting multiple users by sharing the available network resources. Such networks may be multiple access networks that support communications for multiple users by sharing the available network resources.

A wireless communication network may include several components. These components may include wireless communication devices, such as network entities, base stations (e.g., base stations or node Bs) that may support communication for a number of user equipments (UEs). A UE may communicate with a network entity via downlink and uplink. The downlink (or forward link) refers to the communication link from the network entity to the UE, and the uplink (or reverse link) refers to the communication link from the UE to the network entity.

A network entity may transmit data and control information on a downlink to a UE or may receive data and control information on an uplink from the UE. On the downlink, a transmission from the network entity may encounter interference due to transmissions from neighbor network entities or from other wireless radio frequency (RF) transmitters. On the uplink, a transmission from the UE may encounter interference from uplink transmissions of other UEs communicating with the neighbor network entities or from other wireless RF transmitters. This interference may degrade performance on both the downlink and uplink.

As the demand for mobile broadband access continues to increase, the possibilities of interference and congested networks grows with more UEs accessing the long-range wireless communication networks and more short-range wireless systems being deployed in communities. Research and development continue to advance wireless technologies not only to meet the growing demand for mobile broadband access, but to advance and enhance the user experience with mobile communications.

### BRIEF SUMMARY OF SOME EXAMPLES

The following summarizes some aspects of the present disclosure to provide a basic understanding of the discussed technology. This summary is not an extensive overview of all contemplated features of the disclosure and is intended neither to identify key or critical elements of all aspects of the disclosure nor to delineate the scope of any or all aspects of the disclosure. Its sole purpose is to present some concepts of one or more aspects of the disclosure in summary form as a prelude to the more detailed description that is presented later.

In one aspect of the disclosure, a method for wireless communication includes obtaining a time division duplex (TDD) uplink-downlink symbol configuration, wherein the TDD uplink-downlink symbol configuration identifies a pattern of uplink symbols, downlink symbols, and flexible symbols over one or more slots of a carrier bandwidth, receiving a bandwidth configuration identifying a reduced capacity (RedCap)-specific bandwidth part (BWP) allocated to the UE within the carrier bandwidth and a configuration for cell-defining-synchronization signal block (CD-SSB) transmissions, receiving a non-cell-defining-synchronization signal block (NCD-SSB) configuration identifying at least a frequency of NCD-SSB transmissions and a time offset of the NCD-SSB transmissions from the CD-SSB transmissions, and marking a configured flexible symbol of the TDD uplink-downlink symbol configuration as a downlink symbol in response to one or more of an NCD-SSB symbol of the NCD-SSB transmissions or a CD-SSB symbol of the CD-SSB transmissions overlapping with the configured flexible symbol.

In an additional aspect of the disclosure, a method for wireless communication includes obtaining a TDD uplink-downlink symbol configuration, wherein the TDD uplink-downlink symbol configuration identifies a pattern of uplink symbols, downlink symbols, and flexible symbols over one or more slots of a carrier bandwidth, receiving a bandwidth configuration identifying a RedCap-specific BWP allocated to the UE within the carrier bandwidth and a configuration for CD-SSB transmissions, receiving a NCD-SSB configuration identifying at least a frequency of NCD-SSB transmissions and a time offset of the NCD-SSB transmissions from the CD-SSB transmissions, and invalidating one or more NCD-SSB symbols of a plurality of NCD-SSB symbols scheduled according to the NCD-SSB configuration in response to the one or more NCD-SSB symbols overlapping with one or more configured uplink symbols of the TDD uplink-downlink symbol configuration.

In an additional aspect of the disclosure, a method for wireless communication includes obtaining a PRACH configuration, wherein the PRACH configuration identifies a plurality of RACH occasions within a RACH slot, receiving a bandwidth configuration identifying a RedCap-specific BWP allocated to the UE within a carrier bandwidth and a configuration for CD-SSB transmissions, receiving a NCD-SSB configuration identifying at least a frequency of NCD-SSB transmissions and a time offset of the NCD-SSB transmissions from the CD-SSB transmissions, and invalidating a RACH occasion of the plurality of RACH occasions in response to a collision between the RACH occasion and one of an NCD-SSB symbol of the NCD-SSB transmissions, or a CD-SSB symbol of the CD-SSB transmissions, or a combination of the NCD-SSB symbol and the CD-SSB symbol.

In an additional aspect of the disclosure, a UE includes at least one processor and a memory coupled to the at least one processor. The at least one processor is configured to obtain a TDD uplink-downlink symbol configuration, wherein the TDD uplink-downlink symbol configuration identifies a pattern of uplink symbols, downlink symbols, and flexible symbols over one or more slots of a carrier bandwidth, to receive a bandwidth configuration identifying a RedCap-specific BWP allocated to the UE within the carrier bandwidth and a configuration for CD-SSB transmissions, to receive a NCD-SSB configuration identifying at least a frequency of NCD-SSB transmissions and a time offset of the NCD-SSB transmissions from the CD-SSB transmissions, and to mark a configured flexible symbol of the TDD uplink-downlink symbol configuration as a downlink symbol in response to one or more of an NCD-SSB symbol of the NCD-SSB transmissions or a CD-SSB symbol of the CD-SSB transmissions overlapping with the configured flexible symbol.

In an additional aspect of the disclosure, a UE includes at least one processor and a memory coupled to the at least one processor. The at least one processor is configured to obtain a TDD uplink-downlink symbol configuration, wherein the TDD uplink-downlink symbol configuration identifies a pattern of uplink symbols, downlink symbols, and flexible symbols over one or more slots of a carrier bandwidth, to receive a bandwidth configuration identifying a RedCap-specific BWP allocated to the UE within the carrier bandwidth and a configuration for CD-SSB transmissions, to receive a NCD-SSB configuration identifying at least a frequency of NCD-SSB transmissions and a time offset of the NCD-SSB transmissions from the CD-SSB transmissions, and to invalidate one or more NCD-SSB symbols of a plurality of NCD-SSB symbols scheduled according to the NCD-SSB configuration in response to the one or more NCD-SSB symbols overlapping with one or more configured uplink symbols of the TDD uplink-downlink symbol configuration.

In an additional aspect of the disclosure, a UE includes at least one processor and a memory coupled to the at least one processor. The at least one processor is configured to obtain a PRACH configuration, wherein the PRACH configuration identifies a plurality of RACH occasions within a RACH slot, to receive a bandwidth configuration identifying a RedCap-specific BWP allocated to the UE within a carrier bandwidth and a configuration for CD-SSB transmissions, to receive a NCD-SSB configuration identifying at least a frequency of NCD-SSB transmissions and a time offset of the NCD-SSB transmissions from the CD-SSB transmissions, and to invalidate a RACH occasion of the plurality of RACH occasions in response to a collision between the RACH occasion and one of an NCD-SSB symbol of the NCD-SSB transmissions, or a CD-SSB symbol of the CD-SSB transmissions, or a combination of the NCD-SSB symbol and the CD-SSB symbol.

In an additional aspect of the disclosure, a UE includes means for obtaining a TDD uplink-downlink symbol configuration, wherein the TDD uplink-downlink symbol configuration identifies a pattern of uplink symbols, downlink symbols, and flexible symbols over one or more slots of a carrier bandwidth, means for receiving a bandwidth configuration identifying a RedCap-specific BWP allocated to the UE within the carrier bandwidth and a configuration for CD-SSB transmissions, means for receiving a NCD-SSB configuration identifying at least a frequency of NCD-SSB transmissions and a time offset of the NCD-SSB transmissions from the CD-SSB transmissions, and means for marking a configured flexible symbol of the TDD uplink-downlink symbol configuration as a downlink symbol in response to one or more of an NCD-SSB symbol of the NCD-SSB transmissions or a CD-SSB symbol of the CD-SSB transmissions overlapping with the configured flexible symbol.

In an additional aspect of the disclosure, a UE includes means for obtaining a TDD uplink-downlink symbol configuration, wherein the TDD uplink-downlink symbol configuration identifies a pattern of uplink symbols, downlink symbols, and flexible symbols over one or more slots of a carrier bandwidth, means for receiving a bandwidth configuration identifying a RedCap-specific BWP allocated to the UE within the carrier bandwidth and a configuration for CD-SSB transmissions, means for receiving a NCD-SSB configuration identifying at least a frequency of NCD-SSB transmissions and a time offset of the NCD-SSB transmissions from the CD-SSB transmissions, and means for invalidating one or more NCD-SSB symbols of a plurality of NCD-SSB symbols scheduled according to the NCD-SSB configuration in response to the one or more NCD-SSB symbols overlapping with one or more configured uplink symbols of the TDD uplink-downlink symbol configuration.

In an additional aspect of the disclosure, a UE includes means for obtaining a PRACH configuration, wherein the PRACH configuration identifies a plurality of RACH occasions within a RACH slot, means for receiving a bandwidth configuration identifying a RedCap-specific BWP allocated to the UE within a carrier bandwidth and a configuration for CD-SSB transmissions, means for receiving a NCD-SSB configuration identifying at least a frequency of NCD-SSB transmissions and a time offset of the NCD-SSB transmissions from the CD-SSB transmissions, and means for invalidating a RACH occasion of the plurality of RACH occasions in response to a collision between the RACH occasion and one of an NCD-SSB symbol of the NCD-SSB transmissions, or a CD-SSB symbol of the CD-SSB transmissions, or a combination of the NCD-SSB symbol and the CD-SSB symbol.

In an additional aspect of the disclosure, a non-transitory computer-readable medium stores instructions that, when executed by a processor, cause the processor to perform operations. The operations include obtaining a TDD uplink-downlink symbol configuration, wherein the TDD uplink-downlink symbol configuration identifies a pattern of uplink symbols, downlink symbols, and flexible symbols over one or more slots of a carrier bandwidth, receiving a bandwidth configuration identifying a RedCap-specific BWP allocated to the UE within the carrier bandwidth and a configuration for CD-SSB transmissions, receiving a NCD-SSB configuration identifying at least a frequency of NCD-SSB transmissions and a time offset of the NCD-SSB transmissions from the CD-SSB transmissions, and marking a configured flexible symbol of the TDD uplink-downlink symbol configuration as a downlink symbol in response to one or more of an NCD-SSB symbol of the NCD-SSB transmissions or a CD-SSB symbol of the CD-SSB transmissions overlapping with the configured flexible symbol.

In an additional aspect of the disclosure, a non-transitory computer-readable medium stores instructions that, when executed by a processor, cause the processor to perform operations. The operations include obtaining a TDD uplink-downlink symbol configuration, wherein the TDD uplink-downlink symbol configuration identifies a pattern of uplink symbols, downlink symbols, and flexible symbols over one or more slots of a carrier bandwidth, receiving a bandwidth configuration identifying a RedCap-specific BWP allocated to the UE within the carrier bandwidth and a configuration for CD-SSB transmissions, receiving a NCD-SSB configuration identifying at least a frequency of NCD-SSB transmissions and a time offset of the NCD-SSB transmissions from the CD-SSB transmissions, and invalidating one or more NCD-SSB symbols of a plurality of NCD-SSB symbols scheduled according to the NCD-SSB configuration in response to the one or more NCD-SSB symbols overlapping with one or more configured uplink symbols of the TDD uplink-downlink symbol configuration.

In an additional aspect of the disclosure, a non-transitory computer-readable medium stores instructions that, when executed by a processor (e.g., directly, indirectly, after pre-processing, without pre-processing), cause the processor to perform operations. The operations include obtaining a PRACH configuration, wherein the PRACH configuration identifies a plurality of RACH occasions within a RACH slot, receiving a bandwidth configuration identifying a RedCap-specific BWP allocated to the UE within a carrier bandwidth and a configuration for CD-SSB transmissions, receiving a NCD-SSB configuration identifying at least a frequency of NCD-SSB transmissions and a time offset of the NCD-SSB transmissions from the CD-SSB transmissions, and invalidating a RACH occasion of the plurality of RACH occasions in response to a collision between the RACH occasion and one of an NCD-SSB symbol of the NCD-SSB transmissions, or a CD-SSB symbol of the CD-SSB transmissions, or a combination of the NCD-SSB symbol and the CD-SSB symbol.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Such equivalent constructions do not depart from the scope of the appended claims. Characteristics of the concepts disclosed herein, both their organization and method of operation, together with associated advantages will be better understood from the following description when considered in connection with the accompanying figures. Each of the figures is provided for the purposes of illustration and description, and not as a definition of the limits of the claims.

While aspects and implementations are described in this application by illustration to some examples, those skilled in the art will understand that additional implementations and use cases may come about in many different arrangements and scenarios. Innovations described herein may be implemented across many differing platform types, devices, systems, shapes, sizes, packaging arrangements. For example, aspects and/or uses may come about via integrated chip implementations and other non-module-component based devices (e.g., end-user devices, vehicles, communication devices, computing devices, industrial equipment, retail/purchasing devices, medical devices, artificial intelligence (AI)-enabled devices, etc.). While some examples may or may not be specifically directed to use cases or applications, a wide assortment of applicability of described innovations may occur. Implementations may range in spectrum from chip-level or modular components to non-modular, non-chip-level implementations and further to aggregate, distributed, or original equipment manufacturer (OEM) devices or systems incorporating one or more aspects of the described innovations. In some practical settings, devices incorporating described aspects and features may also necessarily include additional components and features for implementation and practice of claimed and described aspects. For example, transmission and reception of wireless signals necessarily includes a number of components for analog and digital purposes (e.g., hardware components including antenna, radio frequency (RF)-chains, power amplifiers, modulators, buffer, processor(s), interleaver, adders/summers, etc.). It is intended that innovations described herein may be practiced in a wide variety of devices, chip-level components, systems, distributed arrangements, end-user devices, etc. of varying sizes, shapes, and constitution.

### BRIEF DESCRIPTION OF THE DRAWINGS

A further understanding of the nature and advantages of the present disclosure may be realized by reference to the following drawings. In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label.
FIG. 1 is a block diagram illustrating example details of an example wireless communication system that supports updated 5G NR operations associated with repeating control signaling configurations according to one or more aspects.
FIG. 2 is a block diagram illustrating examples of a base station and a user equipment (UE) marking symbols and validation of non-cell-defining-synchronization signal block (NCD-SSB) and random access channel (RACH) occasions according to one or more aspects.
FIG. 3 is a diagram illustrating a 5G NR network configured to support marking symbols and validation of NCD-SSB and RACH occasions according to aspects of the present disclosure.
FIG. 4 is a flow diagram illustrating an example process that supports marking symbols and validation of NCD-SSB for RedCap UE operations according to one or more aspects.
FIG. 5 is a diagram illustrating a 5G NR network configured to support marking symbols and validation of NCD-SSB according to aspects of the present disclosure.
FIG. 6 is a flow diagram illustrating an example process that supports marking symbols and validation of NCD-SSB according to one or more aspects.
FIG. 7A is a diagram illustrating a 5G NR network configured to support marking symbols and validation of NCD-SSB according to aspects of the present disclosure.
FIG. 7B is a diagram illustrating an extended time period of 5G NR network configured to support marking symbols and validation of NCD-SSB according to aspects of the present disclosure.
FIG. 8 is a flow diagram illustrating an example process 80 that supports marking symbols and validation of NCD-SSB according to one or more aspects.
FIG. 9 is a diagram illustrating a 5G NR network configured to support validation of RACH occasions according to aspects of the present disclosure.
FIG. 10 is a diagram illustrating a 5G NR network configured to support validation of RACH occasions according to aspects of the present disclosure.
FIG. 11 is a block diagram illustrating an example UE configured to support marking symbols and validation of NCD-SSB according to one or more aspects.

Like reference numbers and designations in the various drawings indicate like elements.

### DETAILED DESCRIPTION

The detailed description set forth below, in connection with the appended drawings, is intended as a description of various configurations and is not intended to limit the scope of the disclosure. Rather, the detailed description includes specific details for the purpose of providing a thorough understanding of the inventive subject matter. It will be apparent to those skilled in the art that these specific details are not required in every case and that, in some instances, structures and components are shown in block diagram form for clarity of presentation.

The present disclosure provides systems, apparatus, methods, and computer-readable media that support marking symbols and validation of non-cell-defining-synchronization signal block (NCD-SSB) and random access channel (RACH) occasions. Particular implementations of the subject matter described in this disclosure may be implemented to realize one or more of the following potential advantages or benefits. In some aspects, the present disclosure provides techniques for marking symbols and validation of NCD-SSB and RACH occasions. The various aspects provide capability for UEs to use NCD-SSB transmissions in addition to CD-SSB transmissions for marking symbols and validating NCD-SSB transmissions and to validate RACH occasions using NCD-SSB transmissions in addition to CD-SSB transmissions. Because RedCap-specific bandwidth parts (BWPs) may not include CD-SSB transmissions, the additional use of NCD-SSB symbols may assist UEs for beam mobility (e.g., radio link monitoring (RLM)/beam failure detection (BFD)/random access channel (RACH), etc.) and timing operations.

This disclosure relates generally to providing or participating in authorized shared access between two or more wireless devices in one or more wireless communications systems, also referred to as wireless communications networks. In various implementations, the techniques and apparatus may be used for wireless communication networks such as code division multiple access (CDMA) networks, time division multiple access (TDMA) networks, frequency division multiple access (FDMA) networks, orthogonal FDMA (OFDMA) networks, single-carrier FDMA (SC-FDMA) networks, LTE networks, GSM networks, 5^{th} Generation (5G) or new radio (NR) networks (sometimes referred to as "5G NR" networks, systems, or devices), as well as other communications networks. As described herein, the terms "networks" and "systems" may be used interchangeably.

A CDMA network, for example, may implement a radio technology such as universal terrestrial radio access (UTRA), cdma2000, and the like. UTRA includes wideband-CDMA (W-CDMA) and low chip rate (LCR). CDMA2000 covers IS-2000, IS-95, and IS-856 standards.

A TDMA network may, for example implement a radio technology such as Global System for Mobile Communication (GSM). The 3rd Generation Partnership Project (3GPP) defines standards for the GSM EDGE (enhanced data rates for GSM evolution) radio access network (RAN), also denoted as GERAN. GERAN is the radio component of GSM/EDGE, together with the network that joins the network entities (for example, the Ater and Abis interfaces) and the network entity controllers (A interfaces, etc.). The radio access network represents a component of a GSM network, through which phone calls and packet data are routed from and to the public switched telephone network (PSTN) and Internet to and from subscriber handsets, also known as user terminals or user equipments (UEs). A mobile phone operator's network may comprise one or more GERANs, which may be coupled with UTRANs in the case of a UMTS/GSM network. Additionally, an operator network may also include one or more LTE networks, or one or more other networks. The various different network types may use different radio access technologies (RATs) and RANs.

An OFDMA network may implement a radio technology such as evolved UTRA (E-UTRA), Institute of Electrical and Electronics Engineers (IEEE) 802.11, IEEE 802.16, IEEE 802.20, flash-OFDM and the like. UTRA, E-UTRA, and GSM are part of universal mobile telecommunication system (UMTS). In particular, long term evolution (LTE) is a release of UMTS that uses E-UTRA. UTRA, E-UTRA, GSM, UMTS and LTE are described in documents provided from an organization named "3rd Generation Partnership Project" (3GPP), and cdma2000 is described in documents from an organization named "3rd Generation Partnership Project 2" (3GPP2). These various radio technologies and standards are known or are being developed. For example, the 3GPP is a collaboration between groups of telecommunications associations that aims to define a globally applicable third generation (3G) mobile phone specification. 3GPP LTE is a 3GPP project which was aimed at improving UMTS mobile phone standard. The 3GPP may define specifications for the next generation of mobile networks, mobile systems, and mobile devices. The present disclosure may describe certain aspects with reference to LTE, 4G, or 5G NR technologies; however, the description is not intended to be limited to a specific technology or application, and one or more aspects described with reference to one technology may be understood to be applicable to another technology. Additionally, one or more aspects of the present disclosure may be related to shared access to wireless spectrum between networks using different radio access technologies or radio air interfaces.

5G networks contemplate diverse deployments, diverse spectrum, and diverse services and devices that may be implemented using an OFDM-based unified, air interface. To achieve these goals, further enhancements to LTE and LTE-A are considered in addition to development of the new radio technology for 5G NR networks. The 5G NR will be capable of scaling to provide coverage (1) to a massive Internet of things (IoTs) with an ultra-high density (e.g., ~1 M nodes/km²), ultra-low complexity (e.g., ~10 s of bits/sec), ultra-low energy (e.g., ~10+ years of battery life), and deep coverage with the capability to reach challenging locations; (2) including mission-critical control with strong security to safeguard sensitive personal, financial, or classified information, ultra-high reliability (e.g., ~99.9999% reliability), ultra-low latency (e.g., ~ 1 millisecond (ms)), and users with wide ranges of mobility or lack thereof; and (3) with enhanced mobile broadband including extreme high capacity (e.g., ~ 10 Tbps/km²), extreme data rates (e.g., multi-Gbps rate, 100+ Mbps user experienced rates), and deep awareness with advanced discovery and optimizations.

Devices, networks, and systems may be configured to communicate via one or more portions of the electromagnetic spectrum. The electromagnetic spectrum is often subdivided, based on frequency or wavelength, into various classes, bands, channels, etc. In 5G NR two initial operating bands have been identified as frequency range designations FR1 (410 MHz - 7.125 GHz) and FR2 (24.25 GHz - 52.6 GHz). The frequencies between FR1 and FR2 are often referred to as mid-band frequencies. Although a portion of FR1 is greater than 6 GHz, FR1 is often referred to (interchangeably) as a "sub-6 GHz" band in various documents and articles. A similar nomenclature issue sometimes occurs with regard to FR2, which is often referred to (interchangeably) as a "millimeter wave" (mmW) band in documents and articles, despite being different from the extremely high frequency (EHF) band (30 GHz - 300 GHz) which is identified by the International Telecommunications Union (ITU) as a "mmW" band.

The frequencies between FR1 and FR2 are often referred to as mid-band frequencies. Recent 5G NR studies have identified an operating band for these mid-band frequencies as frequency range designation FR3 (7.126 GHz-24.25 GHz). Frequency bands falling within FR3 may inherit FR1 characteristics and/or FR2 characteristics, and, thus, may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR2x (52.6 GHz-71 GHz), FR4 (71 GHz-114.25 GHz), and FR5 (114.25 GHz-275 GHz). Each of these higher frequency bands falls within the EHF band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "mmW" or the like if used herein may broadly represent frequencies that may include mid-band frequencies, may be within FR2, FR2x, FR4, and/or FR5, or may be within the EHF band.

5G NR devices, networks, and systems may be implemented to use optimized OFDM-based waveform features. These features may include scalable numerology and transmission time intervals (TTIs); a common, flexible framework to efficiently multiplex services and features with a dynamic, low-latency time division duplex (TDD) design or frequency division duplex (FDD) design; and advanced wireless technologies, such as massive multiple input, multiple output (MIMO), robust mmW transmissions, advanced channel coding, and device-centric mobility. Scalability of the numerology in 5G NR, with scaling of subcarrier spacing, may efficiently address operating diverse services across diverse spectrum and diverse deployments. For example, in various outdoor and macro coverage deployments of less than 3 GHz FDD or TDD implementations, subcarrier spacing may occur with 15 kHz, for example over 1, 5, 10, 20 MHz, and the like bandwidth. For other various outdoor and small cell coverage deployments of TDD greater than 3 GHz, subcarrier spacing may occur with 30 kHz over 80/100 MHz bandwidth. For other various indoor wideband implementations, using a TDD over the unlicensed portion of the 5 GHz band, the subcarrier spacing may occur with 60 kHz over a 160 MHz bandwidth. Finally, for various deployments transmitting with mmW components at a TDD of 28 GHz, subcarrier spacing may occur with 120 kHz over a 500 MHz bandwidth.

The scalable numerology of 5G NR facilitates scalable TTI for diverse latency and quality of service (QoS) requirements. For example, shorter TTI may be used for low latency and high reliability, while longer TTI may be used for higher spectral efficiency. The efficient multiplexing of long and short TTIs to allow transmissions to start on symbol boundaries. 5G NR also contemplates a self-contained integrated subframe design with uplink or downlink scheduling information, data, and acknowledgement in the same subframe. The self-contained integrated subframe supports communications in unlicensed or contention-based shared spectrum, adaptive uplink or downlink that may be flexibly configured on a per-cell basis to dynamically switch between uplink and downlink to meet the current traffic needs.

For clarity, certain aspects of the apparatus and techniques may be described below with reference to example 5G NR implementations or in a 5G-centric way, and 5G terminology may be used as illustrative examples in portions of the description below; however, the description is not intended to be limited to 5G applications.

Moreover, it should be understood that, in operation, wireless communication networks adapted according to the concepts herein may operate with any combination of licensed or unlicensed spectrum depending on loading and availability. Accordingly, it will be apparent to a person having ordinary skill in the art that the systems, apparatus and methods described herein may be applied to other communications systems and applications than the particular examples provided.

While aspects and implementations are described in this application by illustration to some examples, those skilled in the art will understand that additional implementations and use cases may come about in many different arrangements and scenarios. Innovations described herein may be implemented across many differing platform types, devices, systems, shapes, sizes, packaging arrangements. For example, implementations or uses may come about via integrated chip implementations or other non-module-component based devices (e.g., end-user devices, vehicles, communication devices, computing devices, industrial equipment, retail devices or purchasing devices, medical devices, AI-enabled devices, etc.). While some examples may or may not be specifically directed to use cases or applications, a wide assortment of applicability of described innovations may occur. Implementations may range from chip-level or modular components to non-modular, non-chip-level implementations and further to aggregated, distributed, or original equipment manufacturer (OEM) devices or systems incorporating one or more described aspects. In some practical settings, devices incorporating described aspects and features may also necessarily include additional components and features for implementation and practice of claimed and described aspects. It is intended that innovations described herein may be practiced in a wide variety of implementations, including both large devices or small devices, chip-level components, multi-component systems (e.g., radio frequency (RF)-chain, communication interface, processor), distributed arrangements, end-user devices, etc. of varying sizes, shapes, and constitution.

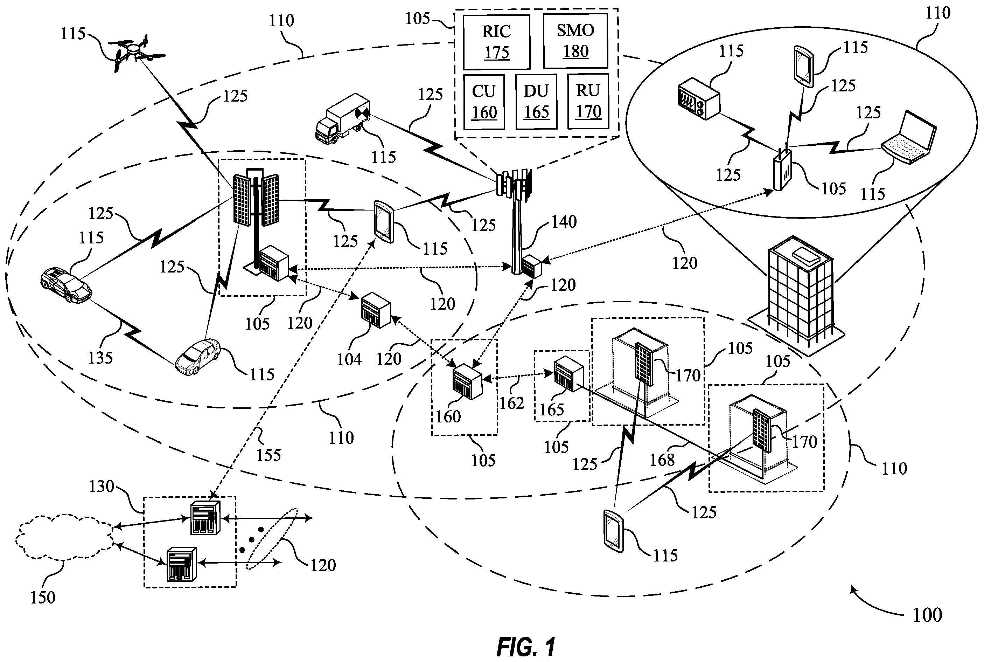

FIG. 1 illustrates an example of a wireless communications system 100 that supports scheduling requests for spatial multiplexing in accordance with one or more aspects of the present disclosure. Wireless communications system 100 may include one or more network entities 105, one or more UEs 115, and a core network 130. In some examples, wireless communications system 100 may be a Long Term Evolution (LTE) network, an LTE-Advanced (LTE-A) network, an LTE-A Pro network, a New Radio (NR) network, or a network operating in accordance with other systems and radio technologies, including future systems and radio technologies not explicitly mentioned herein.

Network entities 105 may be dispersed throughout a geographic area to form wireless communications system 100 and may include devices in different forms or having different capabilities. In 3GPP, the term "cell" may refer to this particular geographic coverage area of a network entity, such as network entities 105, or a network entity subsystem serving the coverage area, depending on the context in which the term is used. In various examples, network entity 105 may be referred to as a network element, a mobility element, a radio access network (RAN) node, or network equipment, among other nomenclature. In some examples, network entities 105 and UEs 115 may wirelessly communicate via one or more communication links 125 (e.g., a radio frequency (RF) access link). For example, network entity 105 may support a coverage area 110 (e.g., a geographic coverage area) over which UEs 115 and network entity 105 may establish one or more communication links 125. Coverage area 110 may be an example of a geographic area over which network entity 105 and UE 115 may support the communication of signals according to one or more radio access technologies (RATs).

UEs 115 may be dispersed throughout coverage area 110 of the wireless communications system 100, and each UE 115 may be stationary, or mobile, or both at different times. UEs 115 may be devices in different forms or having different capabilities. Some example UEs 115 are illustrated in FIG. 1. UEs 115 described herein may be able to communicate with various types of devices, such as other UEs 115 or network entities 105, as shown in FIG. 1.

As described herein, a node of wireless communications system 100, which may be referred to as a network node, or a wireless node, may be network entity 105 (e.g., any network entity described herein), UE 115 (e.g., any UE described herein), a network controller, an apparatus, a device, a computing system, one or more components, or another suitable processing entity configured to perform any of the techniques described herein. For example, a node may be UE 115. As another example, a node may be network entity 105. As another example, a first node may be configured to communicate with a second node or a third node. In one aspect of this example, the first node may be UE 115, the second node may be network entity 105, and the third node may be UE 115. In another aspect of this example, the first node may be UE 115, the second node may be network entity 105, and the third node may be network entity 105. In yet other aspects of this example, the first, second, and third nodes may be different relative to these examples. Similarly, reference to UE 115, network entity 105, apparatus, device, computing system, or the like may include disclosure of UE 115, network entity 105, apparatus, device, computing system, or the like being a node. For example, disclosure that UE 115 is configured to receive information from network entity 105 also discloses that a first node is configured to receive information from a second node.

In some examples, network entities 105 may communicate with core network 130, or with one another, or both. For example, network entities 105 may communicate with the core network 130 via one or more backhaul communication links 120 (e.g., in accordance with an S1, N2, N3, or other interface protocol). In some examples, network entities 105 may communicate with one another over backhaul communication link 120 (e.g., in accordance with an X2, Xn, or other interface protocol) either directly (e.g., directly between network entities 105) or indirectly (e.g., via core network 130). In some examples, network entities 105 may communicate with one another via a midhaul communication link 162 (e.g., in accordance with a midhaul interface protocol) or a fronthaul communication link 168 (e.g., in accordance with a fronthaul interface protocol), or any combination thereof. Backhaul communication links 120, midhaul communication links 162, or fronthaul communication links 168 may be or include one or more wired links (e.g., an electrical link, an optical fiber link), one or more wireless links (e.g., a radio link, a wireless optical link), among other examples or various combinations thereof. UE 115 may communicate with core network 130 through a communication link 155.

One or more of network entities 105 described herein may include or may be referred to as base station 140 (e.g., a base transceiver station, a radio base station, an NR base station, an access point, a radio transceiver, a transmission-reception point (TRP), a NodeB, an eNodeB (eNB), a next-generation NodeB or a giga-NodeB (either of which may be referred to as a gNB), a 5G NB, a next-generation eNB (ng-eNB), a Home NodeB, a Home eNodeB, or other suitable terminology). In some examples, network entity 105 (e.g., base station 140) may be implemented in an aggregated (e.g., monolithic, standalone) base station architecture, which may be configured to utilize a protocol stack that is physically or logically integrated within a single network entity 105 (e.g., a single RAN node, such as base station 140).

In some examples, network entity 105 may be implemented in a disaggregated architecture (e.g., a disaggregated base station architecture, a disaggregated RAN architecture), which may be configured to utilize a protocol stack that is physically or logically distributed among two or more network entities 105, such as an integrated access backhaul (IAB) network, an open RAN (O-RAN) (e.g., a network configuration sponsored by the O-RAN Alliance), or a virtualized RAN (vRAN) (e.g., a cloud RAN (C-RAN)). For example, network entity 105 may include one or more of a central unit (CU) 160, a distributed unit (DU) 165, a radio unit (RU) 170, a RAN Intelligent Controller (RIC) 175 (e.g., a Near-Real Time RIC (Near-RT RIC), a Non-Real Time RIC (Non-RT RIC)), a Service Management and Orchestration (SMO) 180 system, or any combination thereof. RU 170 may also be referred to as a radio head, a smart radio head, a remote radio head (RRH), a remote radio unit (RRU), or a transmission reception point (TRP). One or more components of network entities 105 in a disaggregated RAN architecture may be co-located, or one or more components of the network entities 105 may be located in distributed locations (e.g., separate physical locations). In some examples, one or more network entities 105 of a disaggregated RAN architecture may be implemented as virtual units (e.g., a virtual CU (VCU), a virtual DU (VDU), a virtual RU (VRU)).

The split of functionality between CU 160, DU 165, and RU 175 is flexible and may support different functionalities depending upon which functions (e.g., network layer functions, protocol layer functions, baseband functions, RF functions, and any combinations thereof) are performed at CU 160, DU 165, or RU 175. For example, a functional split of a protocol stack may be employed between CU 160 and DU 165 such that CU 160 may support one or more layers of the protocol stack and DU 165 may support one or more different layers of the protocol stack. In some examples, CU 160 may host upper protocol layer (e.g., layer 3 (L3), layer 2 (L2)) functionality and signaling (e.g., Radio Resource Control (RRC), service data adaption protocol (SDAP), Packet Data Convergence Protocol (PDCP)). CU 160 may be connected to one or more DUs 165 or RUs 170, and one or more DUs 165 or RUs 170 may host lower protocol layers, such as layer 1 (L1) (e.g., physical (PHY) layer) or L2 (e.g., radio link control (RLC) layer, medium access control (MAC) layer) functionality and signaling, and may each be at least partially controlled by CU 160.

Additionally, or alternatively, a functional split of the protocol stack may be employed between DU 165 and RU 170 such that DU 165 may support one or more layers of the protocol stack and RU 170 may support one or more different layers of the protocol stack. DU 165 may support one or multiple different cells (e.g., via one or more RUs 170). In some cases, a functional split between CU 160 and DU 165, or between DU 165 and RU 170 may be within a protocol layer (e.g., some functions for a protocol layer may be performed by one of CU 160, DU 165, or RU 170, while other functions of the protocol layer are performed by a different one of CU 160, DU 165, or RU 170). CU 160 may be functionally split further into CU control plane (CU-CP) and CU user plane (CU-UP) functions. CU 160 may be connected to one or more DUs 165 via midhaul communication link 162 (e.g., F1, F1-c, F1-u), and DU 165 may be connected to one or more RUs 170 via fronthaul communication link 168 (e.g., open fronthaul (FH) interface). In some examples, midhaul communication link 162 or fronthaul communication link 168 may be implemented in accordance with an interface (e.g., a channel) between layers of a protocol stack supported by respective network entities 105 that are in communication over such communication links.

In wireless communications systems (e.g., wireless communications system 100), infrastructure and spectral resources for radio access may support wireless backhaul link capabilities to supplement wired backhaul connections, providing an IAB network architecture (e.g., to core network 130). In some cases, in an IAB network, one or more network entities 105 (e.g., IAB nodes 104) may be partially controlled by each other. One or more IAB nodes 104 may be referred to as a donor entity or an IAB donor. One or more DUs 165 or one or more RUs 170 may be partially controlled by one or more CUs 160 associated with a donor network entity 105 (e.g., a donor base station 140). The one or more donor network entities 105 (e.g., IAB donors) may be in communication with one or more additional network entities 105 (e.g., IAB nodes 104) via supported access and backhaul links (e.g., backhaul communication links 120). IAB nodes 104 may include an IAB mobile termination (IAB-MT) controlled (e.g., scheduled) by DUs 165 of a coupled IAB donor. An IAB-MT may include an independent set of antennas for relay of communications with UEs 115, or may share the same antennas (e.g., of RU 170) of IAB node 104 used for access via DU 165 of IAB node 104 (e.g., referred to as virtual IAB-MT (vIAB-MT)). In some examples, IAB nodes 104 may include DUs 165 that support communication links with additional entities (e.g., IAB nodes 104, UEs 115) within the relay chain or configuration of the access network (e.g., downstream). In such cases, one or more components of the disaggregated RAN architecture (e.g., one or more IAB nodes 104 or components of IAB nodes 104) may be configured to operate according to the techniques described herein.

For instance, an access network (AN) or RAN may include communications between access nodes (e.g., an IAB donor), IAB nodes 104, and one or more UEs 115. The IAB donor may facilitate connection between core network 130 and the AN (e.g., via a wired or wireless connection to core network 130). That is, an IAB donor may refer to a RAN node with a wired or wireless connection to core network 130. The IAB donor may include CU 160 and at least one DU 165 (e.g., and RU 170), in which case CU 160 may communicate with core network 130 over an interface (e.g., a backhaul link). IAB donor and IAB nodes 104 may communicate over an F1 interface according to a protocol that defines signaling messages (e.g., an F1 AP protocol). Additionally, or alternatively, CU 160 may communicate with the core network over an interface, which may be an example of a portion of backhaul link, and may communicate with other CUs 160 (e.g., CU 160 associated with an alternative IAB donor) over an Xn-C interface, which may be an example of a portion of a backhaul link.

IAB node 104 may refer to a RAN node that provides IAB functionality (e.g., access for UEs 115, wireless self-backhauling capabilities). DU 165 may act as a distributed scheduling node towards child nodes associated with IAB node 104, and the IAB-MT may act as a scheduled node towards parent nodes associated with IAB node 104. That is, an IAB donor may be referred to as a parent node in communication with one or more child nodes (e.g., an IAB donor may relay transmissions for UEs through one or more other IAB nodes 104). Additionally, or alternatively, IAB node 104 may also be referred to as a parent node or a child node to other IAB nodes 104, depending on the relay chain or configuration of the AN. Therefore, the IAB-MT entity of IAB nodes 104 may provide a Uu-interface for a child IAB node 104 to receive signaling from parent IAB node 104, and the DU interface (e.g., DUs 165) may provide a Uu-interface for parent IAB node 104 to signal to child IAB node 104 or UE 115.

For example, IAB node 104 may be referred to as a parent node that supports communications for a child IAB node, and referred to as a child IAB node associated with an IAB donor. The IAB donor may include CU 160 with a wired or wireless connection (e.g., backhaul communication link 120) to core network 130 and may act as parent node to IAB nodes 104. For example, DU 165 of IAB donor may relay transmissions to UEs 115 through IAB nodes 104, and may directly signal transmissions to UE 115. CU 160 of IAB donor may signal communication link establishment via an F1 interface to IAB nodes 104, and IAB nodes 104 may schedule transmissions (e.g., transmissions to UEs 115 relayed from the IAB donor) through DUs 165. That is, data may be relayed to and from IAB nodes 104 via signaling over an NR Uu-interface to MT of IAB node 104. Communications with IAB node 104 may be scheduled by DU 165 of IAB donor and communications with IAB node 104 may be scheduled by DU 165 of IAB node 104.

In the case of the techniques described herein applied in the context of a disaggregated RAN architecture, one or more components of the disaggregated RAN architecture may be configured to support scheduling requests for spatial multiplexing as described herein. For example, some operations described as being performed by UE 115 or network entity 105 (e.g., base station 140) may additionally, or alternatively, be performed by one or more components of the disaggregated RAN architecture (e.g., IAB nodes 104, DUs 165, CUs 160, RUs 170, RIC 175, SMO 180).

UE 115 may include or may be referred to as a mobile device, a wireless device, a remote device, a handheld device, or a subscriber device, or some other suitable terminology, where the "device" may also be referred to as a unit, a station, a terminal, or a client, among other examples. UE 115 may also include or may be referred to as a personal electronic device such as a cellular phone, a personal digital assistant (PDA), a tablet computer, a laptop computer, or a personal computer. In some examples, UE 115 may include or be referred to as a wireless local loop (WLL) station, an Internet of Things (IoT) device, an Internet of Everything (IoE) device, or a machine type communications (MTC) device, among other examples, which may be implemented in various objects such as appliances, or vehicles, meters, a satellite radio, a global positioning system (GPS) device, a global navigation satellite system (GNSS) device, a logistics controller, an unmanned aerial vehicle (UAV), a drone, a smart energy or security device, a solar panel or solar array, etc. among other examples.

UEs 115 described herein may be able to communicate with various types of devices, such as other UEs 115 that may sometimes act as relays as well as network entities 105 and the network equipment including macro eNBs or gNBs, small cell eNBs or gNBs, or relay base stations, among other examples, as shown in FIG. 1.

UEs 115 and network entities 105 may wirelessly communicate with one another via one or more communication links 125 (e.g., an access link) over one or more carriers. The term "carrier" may refer to a set of RF spectrum resources having a defined physical layer structure for supporting communication links 125. For example, a carrier used for communication link 125 may include a portion of a RF spectrum band (e.g., a bandwidth part (BWP)) that is operated according to one or more physical layer channels for a given radio access technology (e.g., LTE, LTE-A, LTE-A Pro, NR). Each physical layer channel may carry acquisition signaling (e.g., synchronization signals, system information), control signaling that coordinates operation for the carrier, user data, or other signaling. Wireless communications system 100 may support communication with UE 115 using carrier aggregation or multi-carrier operation. UE 115 may be configured with multiple downlink component carriers and one or more uplink component carriers according to a carrier aggregation configuration. Carrier aggregation may be used with both frequency division duplexing (FDD) and time division duplexing (TDD) component carriers. Communication between network entity 105 and other devices may refer to communication between the devices and any portion (e.g., entity, sub-entity) of network entity 105. For example, the terms "transmitting," "receiving," or "communicating," when referring to network entity 105, may refer to any portion of network entity 105 (e.g., base station 140, CU 160, DU 165, RU 170) of a RAN communicating with another device (e.g., directly or via one or more other network entities 105).

Signal waveforms transmitted over a carrier may be made up of multiple subcarriers (e.g., using multi-carrier modulation (MCM) techniques such as orthogonal frequency division multiplexing (OFDM) or discrete Fourier transform spread OFDM (DFT-S-OFDM)). In a system employing MCM techniques, a resource element may refer to resources of one symbol period (e.g., a duration of one modulation symbol) and one subcarrier, in which case the symbol period and subcarrier spacing may be inversely related. The quantity of bits carried by each resource element may depend on the modulation scheme (e.g., the order of the modulation scheme, the coding rate of the modulation scheme, or both) such that the more resource elements that a device receives and the higher the order of the modulation scheme, the higher the data rate may be for the device. A wireless communications resource may refer to a combination of an RF spectrum resource, a time resource, and a spatial resource (e.g., a spatial layer, a beam), and the use of multiple spatial resources may increase the data rate or data integrity for communications with UE 115.

One or more numerologies for a carrier may be supported, where a numerology may include a subcarrier spacing (Δ*f*) and a cyclic prefix. A carrier may be divided into one or more BWPs having the same or different numerologies. In some examples, UE 115 may be configured with multiple BWPs. In some examples, a single BWP for a carrier may be active at a given time and communications for UE 115 may be restricted to one or more active BWPs.

The time intervals for network entities 105 or UEs 115 may be expressed in multiples of a basic time unit which may, for example, refer to a sampling period of *Tₛ =* 1/(Δ*fₘₐₓ* · *N_{f}*) seconds, where Δ*fₘₐₓ* may represent the maximum supported subcarrier spacing, and *N_{f}* may represent the maximum supported discrete Fourier transform (DFT) size. Time intervals of a communications resource may be organized according to radio frames each having a specified duration (e.g., 10 milliseconds (ms)). Each radio frame may be identified by a system frame number (SFN) (e.g., ranging from 0 to 1023).

Each frame may include multiple consecutively numbered subframes or slots, and each subframe or slot may have the same duration. In some examples, a frame may be divided (e.g., in the time domain) into subframes, and each subframe may be further divided into a quantity of slots. Alternatively, each frame may include a variable quantity of slots, and the quantity of slots may depend on subcarrier spacing. Each slot may include a quantity of symbol periods (e.g., depending on the length of the cyclic prefix prepended to each symbol period). In some wireless communications systems 100, a slot may further be divided into multiple mini-slots containing one or more symbols. Excluding the cyclic prefix, each symbol period may contain one or more (e.g., *N_{f}*) sampling periods. The duration of a symbol period may depend on the subcarrier spacing or frequency band of operation.

A subframe, a slot, a mini-slot, or a symbol may be the smallest scheduling unit (e.g., in the time domain) of the wireless communications system 100 and may be referred to as a transmission time interval (TTI). In some examples, the TTI duration (e.g., a quantity of symbol periods in a TTI) may be variable. Additionally, or alternatively, the smallest scheduling unit of the wireless communications system 100 may be dynamically selected (e.g., in bursts of shortened TTIs (sTTIs)).

Physical channels may be multiplexed on a carrier according to various techniques. A physical control channel and a physical data channel may be multiplexed on a downlink carrier, for example, using one or more of time division multiplexing (TDM) techniques, frequency division multiplexing (FDM) techniques, or hybrid TDM-FDM techniques. A control region (e.g., a control resource set (CORESET)) for a physical control channel may be defined by a set of symbol periods and may extend across the system bandwidth or a subset of the system bandwidth of the carrier. One or more control regions (e.g., CORESETs) may be configured for a set of UEs 115. For example, one or more of UEs 115 may monitor or search control regions for control information according to one or more search space sets, and each search space set may include one or multiple control channel candidates in one or more aggregation levels arranged in a cascaded manner. An aggregation level for a control channel candidate may refer to an amount of control channel resources (e.g., control channel elements (CCEs)) associated with encoded information for a control information format having a given payload size. Search space sets may include common search space sets configured for sending control information to multiple UEs 115 and UE-specific search space sets for sending control information to a specific one of UEs 115.

In some examples, network entity 105 (e.g., base station 140, RU 170) may be movable and therefore provide communication coverage for a moving one of coverage areas 110. In some examples, a different one of coverage areas 110 associated with different technologies may overlap, but the different one of coverage areas 110 may be supported by the same one of network entities 105. In some other examples, the overlapping coverage areas 110 associated with different technologies may be supported by different ones of network entities 105. Wireless communications system 100 may include, for example, a heterogeneous network in which different types of network entities 105 provide coverage for various coverage areas 110 using the same or different radio access technologies.

Some of UEs 115, such as MTC or IoT devices, may be low cost or low complexity devices and may provide for automated communication between machines (e.g., via Machine-to-Machine (M2M) communication). M2M communication or MTC may refer to data communication technologies that allow devices to communicate with one another or network entity 105 (e.g., base station 140) without human intervention. In some examples, M2M communication or MTC may include communications from devices that integrate sensors or meters to measure or capture information and relay such information to a central server or application program that makes use of the information or presents the information to humans interacting with the application program. Some of UEs 115 may be designed to collect information or enable automated behavior of machines or other devices. Examples of applications for MTC devices include smart metering, inventory monitoring, water level monitoring, equipment monitoring, healthcare monitoring, wildlife monitoring, weather and geological event monitoring, fleet management and tracking, remote security sensing, physical access control, and transaction-based business charging.

Some of UEs 115 may be configured to employ operating modes that reduce power consumption, such as half-duplex communications (e.g., a mode that supports one-way communication via transmission or reception, but not transmission and reception concurrently). In some examples, half-duplex communications may be performed at a reduced peak rate. Other power conservation techniques for UEs 115 include entering a power saving deep sleep mode when not engaging in active communications, operating over a limited bandwidth (e.g., according to narrowband communications), or a combination of these techniques. For example, some of UEs 115 may be configured for operation using a narrowband protocol type that is associated with a defined portion or range (e.g., set of subcarriers or resource blocks (RBs)) within a carrier, within a guard-band of a carrier, or outside of a carrier.

Wireless communications system 100 may be configured to support ultra-reliable communications or low-latency communications, or various combinations thereof. For example, wireless communications system 100 may be configured to support ultra-reliable low-latency communications (URLLC). UEs 115 may be designed to support ultra-reliable, low-latency, or critical functions. Ultra-reliable communications may include private communication or group communication and may be supported by one or more services such as push-to-talk, video, or data. Support for ultra-reliable, low-latency functions may include prioritization of services, and such services may be used for public safety or general commercial applications. The terms ultra-reliable, low-latency, and ultra-reliable low-latency may be used interchangeably herein.

In some examples, UE 115 may be able to communicate directly with other UEs 115 over a device-to-device (D2D) communication link 135 (e.g., in accordance with a peer-to-peer (P2P), D2D, or sidelink protocol). In some examples, one or more UEs 115 of a group that are performing D2D communications may be within coverage area 110 of network entity 105 (e.g., base station 140, RU 170), which may support aspects of such D2D communications being configured by or scheduled by network entity 105. In some examples, one or more UEs 115 in such a group may be outside coverage area 110 of network entity 105 or may be otherwise unable to or not configured to receive transmissions from network entity 105. In some examples, groups of UEs 115 communicating via D2D communications may support a one-to-many (1:M) system in which each UE 115 transmits to each of the other ones of UEs 115 in the group. In some examples, network entity 105 may facilitate the scheduling of resources for D2D communications. In some other examples, D2D communications may be carried out between UEs 115 without the involvement of network entity 105.

In some systems, D2D communication link 135 may be an example of a communication channel, such as a sidelink communication channel, between vehicles (e.g., UEs 115). In some examples, vehicles may communicate using vehicle-to-everything (V2X) communications, vehicle-to-vehicle (V2V) communications, or some combination of these. A vehicle may signal information related to traffic conditions, signal scheduling, weather, safety, emergencies, or any other information relevant to a V2X system. In some examples, vehicles in a V2X system may communicate with roadside infrastructure, such as roadside units, or with the network via one or more network nodes (e.g., network entities 105, base stations 140, RUs 170) using vehicle-to-network (V2N) communications, or with both.

Core network 130 may provide user authentication, access authorization, tracking, Internet Protocol (IP) connectivity, and other access, routing, or mobility functions. Core network 130 may be an evolved packet core (EPC) or 5G core (5GC), which may include at least one control plane entity that manages access and mobility (e.g., a mobility management entity (MME), an access and mobility management function (AMF)) and at least one user plane entity that routes packets or interconnects to external networks (e.g., a serving gateway (S-GW), a Packet Data Network (PDN) gateway (P-GW), or a user plane function (UPF)). The control plane entity may manage non-access stratum (NAS) functions such as mobility, authentication, and bearer management for UEs 115 served by network entities 105 (e.g., base stations 140) associated with core network 130. User IP packets may be transferred through the user plane entity, which may provide IP address allocation as well as other functions. The user plane entity may be connected to IP services 150 for one or more network operators. IP services 150 may include access to the Internet, Intranet(s), an IP Multimedia Subsystem (IMS), or a Packet-Switched Streaming Service.

Wireless communications system 100 may operate using one or more frequency bands, which may be in the range of 300 megahertz (MHz) to 300 gigahertz (GHz). Generally, the region from 300 MHz to 3 GHz is known as the ultra-high frequency (UHF) region or decimeter band because the wavelengths range from approximately one decimeter to one meter in length. The UHF waves may be blocked or redirected by buildings and environmental features, which may be referred to as clusters, but the waves may penetrate structures sufficiently for a macro cell to provide service to UEs 115 located indoors. The transmission of UHF waves may be associated with smaller antennas and shorter ranges (e.g., less than 100 kilometers) compared to transmission using the smaller frequencies and longer waves of the high frequency (HF) or very high frequency (VHF) portion of the spectrum below 300 MHz.

Wireless communications system 100 may also operate in a super high frequency (SHF) region using frequency bands from 3 GHz to 30 GHz, also known as the centimeter band, or in an extremely high frequency (EHF) region of the spectrum (e.g., from 30 GHz to 300 GHz), also known as the millimeter band. In some examples, the wireless communications system 100 may support millimeter wave (mmW) communications between UEs 115 and network entities 105 (e.g., base stations 140, RUs 170), and EHF antennas of the respective devices may be smaller and more closely spaced than UHF antennas. In some examples, this may facilitate use of antenna arrays within a device. The propagation of EHF transmissions, however, may be subject to even greater atmospheric attenuation and shorter range than SHF or UHF transmissions. The techniques disclosed herein may be employed across transmissions that use one or more different frequency regions, and designated use of bands across these frequency regions may differ by country or regulating body.

Wireless communications system 100 may utilize both licensed and unlicensed RF spectrum bands. For example, wireless communications system 100 may employ License Assisted Access (LAA), LTE-Unlicensed (LTE-U) radio access technology, or NR technology in an unlicensed band such as the 5 GHz industrial, scientific, and medical (ISM) band. While operating in unlicensed RF spectrum bands, devices such as network entities 105 and UEs 115 may employ carrier sensing for collision detection and avoidance. In some examples, operations in unlicensed bands may be based on a carrier aggregation configuration in conjunction with component carriers operating in a licensed band (e.g., LAA). Operations in unlicensed spectrum may include downlink transmissions, uplink transmissions, P2P transmissions, or D2D transmissions, among other examples.

Network entity 105 (e.g., base station 140, RU 170) or UE 115 may be equipped with multiple antennas, which may be used to employ techniques such as transmit diversity, receive diversity, multiple-input multiple-output (MIMO) communications, or beamforming. The antennas of network entity 105 or UE 115 may be located within one or more antenna arrays or antenna panels, which may support MIMO operations or transmit or receive beamforming. For example, one or more base station antennas or antenna arrays may be co-located at an antenna assembly, such as an antenna tower. In some examples, antennas or antenna arrays associated with network entity 105 may be located in diverse geographic locations. Network entity 105 may have an antenna array with a set of rows and columns of antenna ports that network entity 105 may use to support beamforming of communications with UE 115. Likewise, UE 115 may have one or more antenna arrays that may support various MIMO or beamforming operations. Additionally, or alternatively, an antenna panel may support RF beamforming for a signal transmitted via an antenna port.

Network entities 105 or UEs 115 may use MIMO communications to exploit multipath signal propagation and increase the spectral efficiency by transmitting or receiving multiple signals via different spatial layers. Such techniques may be referred to as spatial multiplexing. The multiple signals may, for example, be transmitted by the transmitting device via different antennas or different combinations of antennas. Likewise, the multiple signals may be received by the receiving device via different antennas or different combinations of antennas. Each of the multiple signals may be referred to as a separate spatial stream and may carry information associated with the same data stream (e.g., the same codeword) or different data streams (e.g., different codewords). Different spatial layers may be associated with different antenna ports used for channel measurement and reporting. MIMO techniques include single-user MIMO (SU-MIMO), where multiple spatial layers are transmitted to the same receiving device, and multiple-user MIMO (MU-MIMO), where multiple spatial layers are transmitted to multiple devices.

Beamforming, which may also be referred to as spatial filtering, directional transmission, or directional reception, is a signal processing technique that may be used at a transmitting device or a receiving device (e.g., network entity 105, UE 115) to shape or steer an antenna beam (e.g., a transmit beam, a receive beam) along a spatial path between the transmitting device and the receiving device. Beamforming may be achieved by combining the signals communicated via antenna elements of an antenna array such that some signals propagating at particular orientations with respect to an antenna array experience constructive interference while others experience destructive interference. The adjustment of signals communicated via the antenna elements may include a transmitting device or a receiving device applying amplitude offsets, phase offsets, or both to signals carried via the antenna elements associated with the device. The adjustments associated with each of the antenna elements may be defined by a beamforming weight set associated with a particular orientation (e.g., with respect to the antenna array of the transmitting device or receiving device, or with respect to some other orientation).

Network entity 105 or UE 115 may use beam sweeping techniques as part of beamforming operations. For example, network entity 105 (e.g., base station 140, RU 170) may use multiple antennas or antenna arrays (e.g., antenna panels) to conduct beamforming operations for directional communications with UE 115. Some signals (e.g., synchronization signals, reference signals, beam selection signals, or other control signals) may be transmitted by network entity 105 multiple times along different directions. For example, network entity 105 may transmit a signal according to different beamforming weight sets associated with different directions of transmission. Transmissions along different beam directions may be used to identify (e.g., by a transmitting device, such as network entity 105, or by a receiving device, such as UE 115) a beam direction for later transmission or reception by network entity 105.

Some signals, such as data signals associated with a particular receiving device, may be transmitted by a transmitting device (e.g., transmitting network entity 105, transmitting UE 115) along a single beam direction (e.g., a direction associated with the receiving device, such as receiving network entity 105 or receiving UE 115). In some examples, the beam direction associated with transmissions along a single beam direction may be determined based on a signal that was transmitted along one or more beam directions. For example, UE 115 may receive one or more of the signals transmitted by network entity 105 along different directions and may report to network entity 105 an indication of the signal that UE 115 received with a highest signal quality or an otherwise acceptable signal quality.

In some examples, transmissions by a device (e.g., by network entity 105 or UE 115) may be performed using multiple beam directions, and the device may use a combination of digital precoding or beamforming to generate a combined beam for transmission (e.g., from network entity 105 to UE 115). The UE 115 may report feedback that indicates precoding weights for one or more beam directions, and the feedback may correspond to a configured set of beams across a system bandwidth or one or more sub-bands. Network entity 105 may transmit a reference signal (e.g., a cell-specific reference signal (CRS), a channel state information reference signal (CSI-RS)), which may be precoded or unprecoded. UE 115 may provide feedback for beam selection, which may be a precoding matrix indicator (PMI) or codebook-based feedback (e.g., a multi-panel type codebook, a linear combination type codebook, a port selection type codebook). Although these techniques are described with reference to signals transmitted along one or more directions by network entity 105 (e.g., base station 140, RU 170), UE 115 may employ similar techniques for transmitting signals multiple times along different directions (e.g., for identifying a beam direction for subsequent transmission or reception by UE 115) or for transmitting a signal along a single direction (e.g., for transmitting data to a receiving device).

A receiving device (e.g., UE 115) may perform reception operations in accordance with multiple receive configurations (e.g., directional listening) when receiving various signals from a receiving device (e.g., network entity 105), such as synchronization signals, reference signals, beam selection signals, or other control signals. For example, a receiving device may perform reception in accordance with multiple receive directions by receiving via different antenna subarrays, by processing received signals according to different antenna subarrays, by receiving according to different receive beamforming weight sets (e.g., different directional listening weight sets) applied to signals received at multiple antenna elements of an antenna array, or by processing received signals according to different receive beamforming weight sets applied to signals received at multiple antenna elements of an antenna array, any of which may be referred to as "listening" according to different receive configurations or receive directions. In some examples, a receiving device may use a single receive configuration to receive along a single beam direction (e.g., when receiving a data signal). The single receive configuration may be aligned along a beam direction determined based on listening according to different receive configuration directions (e.g., a beam direction determined to have a highest signal strength, highest signal-to-noise ratio (SNR), or otherwise acceptable signal quality based on listening according to multiple beam directions).

Wireless communications system 100 may be a packet-based network that operates according to a layered protocol stack. In the user plane, communications at the bearer or PDCP layer may be IP-based. An RLC layer may perform packet segmentation and reassembly to communicate over logical channels. A MAC layer may perform priority handling and multiplexing of logical channels into transport channels. The MAC layer may also use error detection techniques, error correction techniques, or both to support retransmissions at the MAC layer to improve link efficiency. In the control plane, the RRC protocol layer may provide establishment, configuration, and maintenance of an RRC connection between UE 115 and network entity 105 or core network 130 supporting radio bearers for user plane data. At the PHY layer, transport channels may be mapped to physical channels.

UEs 115 and network entities 105 may support retransmissions of data to increase the likelihood that data is received successfully. Hybrid automatic repeat request (HARQ) feedback is one technique for increasing the likelihood that data is received correctly over a communication link (e.g., communication link 125, D2D communication link 135). HARQ may include a combination of error detection (e.g., using a cyclic redundancy check (CRC)), forward error correction (FEC), and retransmission (e.g., automatic repeat request (ARQ)). HARQ may improve throughput at the MAC layer in poor radio conditions (e.g., low signal-to-noise conditions). In some examples, a device may support same-slot HARQ feedback, where the device may provide HARQ feedback in a specific slot for data received in a previous symbol in the slot. In some other examples, the device may provide HARQ feedback in a subsequent slot, or according to some other time interval.

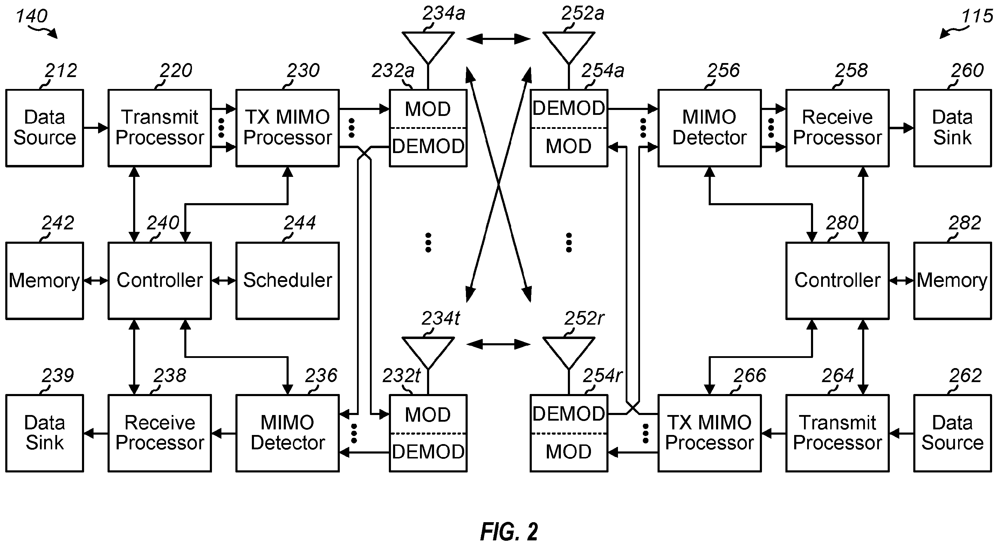

FIG. 2 is a block diagram illustrating examples of base station 140 and UE 115 according to one or more aspects. Base station 140 and UE 115 may be any of the network entities and base stations and one of the UEs in FIG. 1. For a restricted association scenario (as mentioned above), network entity 105 may be small cell base station, and UE 115 may be UE 115 operating in a service area of the small cell base station, which in order to access the small cell base station, would be included in a list of accessible UEs for the small cell base station. Base station 140 may also be a base station of some other type. As shown in FIG. 2, a network entity 105, such as base station 140 may be equipped with antennas 234a through 234t, and UE 115 may be equipped with antennas 252a through 252r for facilitating wireless communications.

At base station 140, transmit processor 220 may receive data from data source 212 and control information from controller 240, such as a processor. The control information may be for a physical broadcast channel (PBCH), a physical control format indicator channel (PCFICH), a physical hybrid-ARQ (automatic repeat request) indicator channel (PHICH), a physical downlink control channel (PDCCH), an enhanced physical downlink control channel (EPDCCH), an MTC physical downlink control channel (MPDCCH), etc. The data may be for a physical downlink shared channel (PDSCH), etc. Additionally, transmit processor 220 may process (e.g., encode and symbol map) the data and control information to obtain data symbols and control symbols, respectively. Transmit processor 220 may also generate reference symbols, e.g., for the primary synchronization signal (PSS) and secondary synchronization signal (SSS), and cell-specific reference signal. Transmit (TX) MIMO processor 230 may perform spatial processing (e.g., precoding) on the data symbols, the control symbols, or the reference symbols, if applicable, and may provide output symbol streams to modulators (MODs) 232a through 232t. For example, spatial processing performed on the data symbols, the control symbols, or the reference symbols may include precoding. Each modulator 232 may process a respective output symbol stream (e.g., for OFDM, etc.) to obtain an output sample stream. Each modulator 232 may additionally or alternatively process (e.g., convert to analog, amplify, filter, and upconvert) the output sample stream to obtain a downlink signal. Downlink signals from modulators 232a through 232t may be transmitted via antennas 234a through 234t, respectively.

At UE 115, antennas 252a through 252r may receive the downlink signals from base station 140 and may provide received signals to demodulators (DEMODs) 254a through 254r, respectively. Each demodulator 254 may condition (e.g., filter, amplify, downconvert, and digitize) a respective received signal to obtain input samples. Each demodulator 254 may further process the input samples (e.g., for OFDM, etc.) to obtain received symbols. MIMO detector 256 may obtain received symbols from demodulators 254a through 254r, perform MIMO detection on the received symbols if applicable, and provide detected symbols. Receive processor 258 may process (e.g., demodulate, deinterleave, and decode) the detected symbols, provide decoded data for UE 115 to data sink 260, and provide decoded control information to controller 280, such as a processor.

On the uplink, at UE 115, transmit processor 264 may receive and process data (e.g., for a physical uplink shared channel (PUSCH)) from data source 262 and control information (e.g., for a physical uplink control channel (PUCCH)) from controller 280. Additionally, transmit processor 264 may also generate reference symbols for a reference signal. The symbols from transmit processor 264 may be precoded by TX MIMO processor 266 if applicable, further processed by modulators 254a through 254r (e.g., for SC-FDM, etc.), and transmitted to network entity 105. At network entity 105, the uplink signals from UE 115 may be received by antennas 234, processed by demodulators 232, detected by MIMO detector 236 if applicable, and further processed by receive processor 238 to obtain decoded data and control information sent by UE 115. Receive processor 238 may provide the decoded data to data sink 239 and the decoded control information to controller 240.

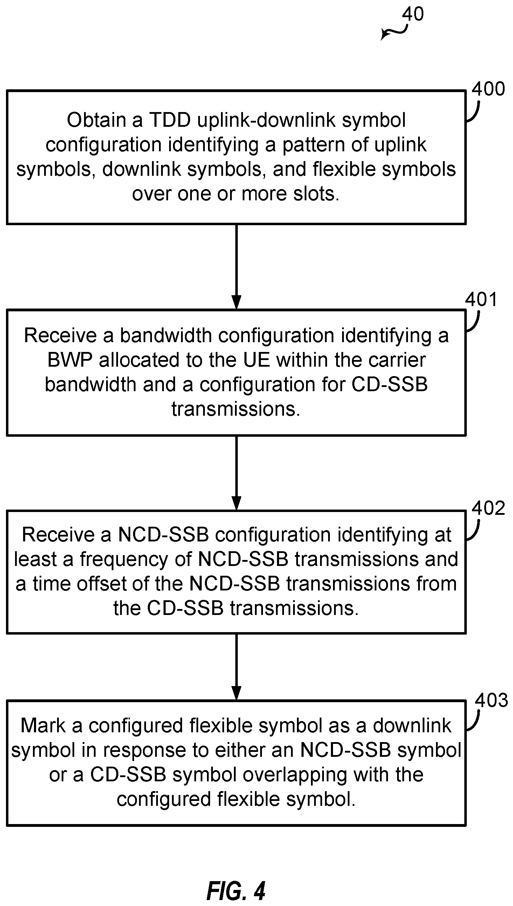

Controllers 240 and 280 may direct the operation at base station 140 and UE 115, respectively. Controller 240 or other processors and modules at base station 140 or controller 280 or other processors and modules at UE 115 may perform or direct the execution of various processes for the techniques described herein, such as to perform or direct the execution illustrated in FIGs. 4, 6, and 8, or other processes for the techniques described herein. Memories 242 and 282 may store data and program codes for base station 140 and UE 115, respectively. Scheduler 244 may schedule UEs for data transmission on the downlink or the uplink.

In some cases, UE 115 and a network entity 105, such as base station 140, may operate in a shared radio frequency spectrum band, which may include licensed or unlicensed (e.g., contention-based) frequency spectrum. In an unlicensed frequency portion of the shared radio frequency spectrum band, UEs 115 or base station 140 may traditionally perform a medium-sensing procedure to contend for access to the frequency spectrum. For example, UE 115 or base station 140 may perform a listen-before-talk or listen-before-transmitting (LBT) procedure such as a clear channel assessment (CCA) prior to communicating in order to determine whether the shared channel is available. In some implementations, a CCA may include an energy detection procedure to determine whether there are any other active transmissions. For example, a device may infer that a change in a received signal strength indicator (RSSI) of a power meter indicates that a channel is occupied. Specifically, signal power that is concentrated in a certain bandwidth and exceeds a predetermined noise floor may indicate another wireless transmitter. A CCA also may include detection of specific sequences that indicate use of the channel. For example, another device may transmit a specific preamble prior to transmitting a data sequence. In some cases, an LBT procedure may include a wireless node adjusting its own backoff window based on the amount of energy detected on a channel or the acknowledge/negative-acknowledge (ACK/NACK) feedback for its own transmitted packets as a proxy for collisions.

In general, four categories of LBT procedure have been suggested for sensing a shared channel for signals that may indicate the channel is already occupied. In a first category (CAT 1 LBT), no LBT or CCA is applied to detect occupancy of the shared channel. A second category (CAT 2 LBT), which may also be referred to as an abbreviated LBT, a single-shot LBT, a 16-µs, or a 25-µs LBT, provides for the node to perform a CCA to detect energy above a predetermined threshold or detect a message or preamble occupying the shared channel. The CAT 2 LBT performs the CCA without using a random back-off operation, which results in its abbreviated length, relative to the next categories.

A third category (CAT 3 LBT) performs CCA to detect energy or messages on a shared channel, but also uses a random back-off and fixed contention window. Therefore, when the node initiates the CAT 3 LBT, it performs a first CCA to detect occupancy of the shared channel. If the shared channel is idle for the duration of the first CCA, the node may proceed to transmit. However, if the first CCA detects a signal occupying the shared channel, the node selects a random back-off based on the fixed contention window size and performs an extended CCA. If the shared channel is detected to be idle during the extended CCA and the random number has been decremented to 0, then the node may begin transmission on the shared channel. Otherwise, the node decrements the random number and performs another extended CCA. The node would continue performing extended CCA until the random number reaches 0. If the random number reaches 0 without any of the extended CCAs detecting channel occupancy, the node may then transmit on the shared channel. If at any of the extended CCA, the node detects channel occupancy, the node may re-select a new random back-off based on the fixed contention window size to begin the countdown again.

A fourth category (CAT 4 LBT), which may also be referred to as a full LBT procedure, performs the CCA with energy or message detection using a random back-off and variable contention window size. The sequence of CCA detection proceeds similarly to the process of the CAT 3 LBT, except that the contention window size is variable for the CAT 4 LBT procedure.

Sensing for shared channel access may also be categorized into either full-blown or abbreviated types of LBT procedures. For example, a full LBT procedure, such as a CAT 3 or CAT 4 LBT procedure, including extended channel clearance assessment (ECCA) over a non-trivial number of 9-µs slots, may also be referred to as a "Type 1 LBT." An abbreviated LBT procedure, such as a CAT 2 LBT procedure, which may include a one-shot CCA for 16-µs or 25-µs, may also be referred to as a "Type 2 LBT."

Use of a medium-sensing procedure to contend for access to an unlicensed shared spectrum may result in communication inefficiencies. This may be particularly evident when multiple network operating entities (e.g., network operators) are attempting to access a shared resource. In wireless communications system 100, network entities 105 and UEs 115 may be operated by the same or different network operating entities. In some examples, an individual network entity 105 or UE 115 may be operated by more than one network operating entity. In other examples, each network entity 105 and UE 115 may be operated by a single network operating entity. Requiring each network entity 105 and UE 115 of different network operating entities to contend for shared resources may result in increased signaling overhead and communication latency.

In some cases, operations in unlicensed bands may be based on a carrier aggregation configuration in conjunction with component carriers operating in a licensed band (e.g., LAA). Operations in unlicensed spectrum may include downlink transmissions, uplink transmissions, peer-to-peer transmissions, or a combination of these. Duplexing in unlicensed spectrum may be based on frequency division duplexing (FDD), time division duplexing (TDD), or a combination of both.

The flexibility and scalability of 5G NR technology has enabled the possibility to introduce timely enhancements to address new use cases, which can expand the 5G ecosystem and connect more and more devices to the network. One example of such enhancement is 5G NR support for reduced capability (RedCap) devices. The introduction of reduced capability 5G NR devices can facilitate the expansion of the 5G NR device ecosystem to address new, unserved, or underserved use cases.

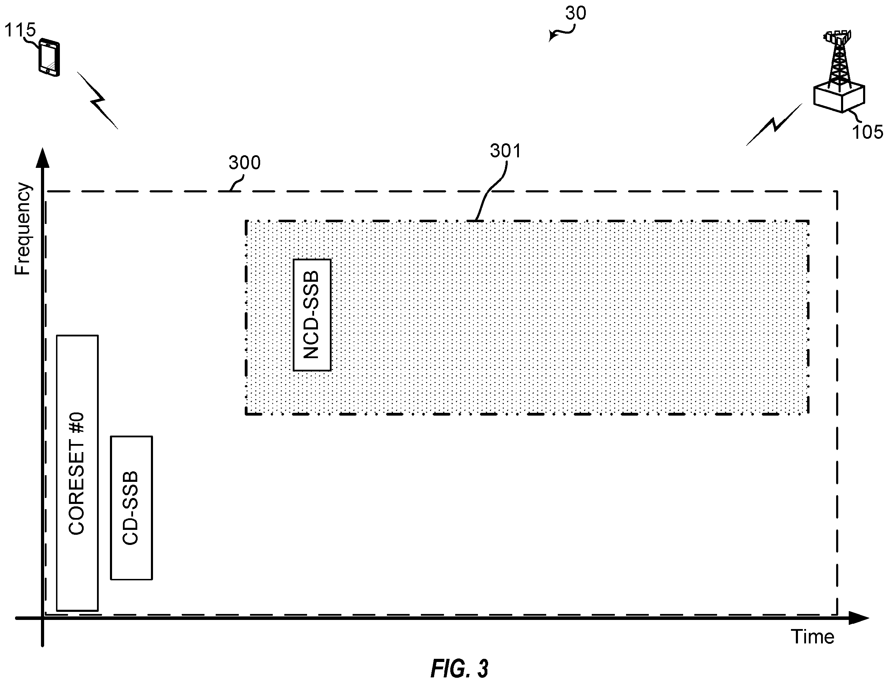

FIG. 3 is a diagram illustrating 5G NR network 30 configured to support marking symbols and validation of non-cell-defining-synchronization signal block (NCD-S SB) and random access channel (RACH) occasions for RedCap UE operation according to aspects of the present disclosure. RedCap UEs defined according to 3GPP Release 17 (Rel-17) may coexist with non-RedCap UEs in the same cell. According to the current specification, RedCap UE may be configured according to a maximum radio frequency (RF) bandwidth (e.g., 20 MHz, 40 MHz, etc.), while the underlying carrier bandwidth of a 5G NR cell may be up to 100 MHz. 5G NR network 30 includes operations between RedCap UE 115 and network entity 105, which serves a given cell. The cell served by network entity 105 includes a carrier bandwidth (e.g., up to 100 MHz), which may include dedicated uplink and downlink bandwidth parts (BWPs) to serve non-RedCap UEs, and RedCap-specific BWPs, such as RedCap-specific BWP 301, to serve RedCap UEs, such as UE 115.

Because of the frequency window of RedCap-specific BWPs, such as RedCap-specific BWP 301, basic RedCap UEs may not be capable of using cell-defining SSBs (CD-SSBs) for beam mobility (e.g., radio link monitoring (RLM)/beam failure detection (BFD)/random access channel (RACH), etc.) and timing, as CD-SSBs may fall outside of the RedCap-specific BWP, such as CD-SSB within carrier bandwidth 300 falling outside of RedCap-specific BWP 301. However, some RedCap UEs may have the capability to tune outside of its limited bandwidth during network-configured gaps, such as outside of RedCap-specific BWP 301, and use CD-SSB. BWP-specific NCD-SSBs have been introduced that RedCap UEs can use for relevant operations when such NCD-SSB lies within a configured dedicated and active RedCap-specific BWP, such as NCD-SSB lying within RedCap-specific BWP 301.

Within the current Rel-17 standards that define the NCD-SSB, a UE assumes that an active BWP will include a synchronization signal block (SSB), which includes both synchronization signals (e.g., a primary synchronization signal (PSS), and a second synchronization signal (SSS)) and a physical block channel (PBCH) and does not include a control resource set (CORESET) having a 0 index (CORESET0), unless the UE indicates a capability that it can operate within the active BWP without receiving an SSB.

A RedCap UE may receive configuration of NCB-SSB transmissions via an information element. The NCB-SSB information element may include the frequency range of the NCD-SSB transmissions that indicates a location with the RedCap-specific BWP. The information element may also include a periodicity when the periodicity is more frequent that the periodicity of CD-SSB transmissions. When no periodicity is included within the information element, the RedCap UE may apply the CD-SSB transmission periodicity. Additionally, the information element configuring NCD-SSB transmissions may include a time offset that identifies the time between the CD-SSB of the serving cell and the NCD-SSB. The time offset may be a 0 time. Moreover, when the information element does not include an explicit time offset, the RedCap UE will assume a 0 offset from the CD-SSB. The potential for a non-zero time offset means that the serving cell CD-SSB and the RedCap-specific BWP NCD-SSB may be located at different times.

The 5G NR specifications currently define three types of symbols: downlink (D), uplink (U) and flexible (X) symbols. Downlink symbols are configured for downlink communications, uplink symbols are configured for uplink communications, and flexible symbols may accommodate downlink communications under certain conditions and may accommodate uplink communications under other conditions. The particular symbol sequence for a given one or more slots may be provided via configuration signals including the uplink-downlink symbol configuration. The network attempts to configure CD-SSB symbols outside of any configured uplink symbols from the uplink-downlink configuration. Thus, where a CD-SSB symbol may overlap with a configured uplink symbol, the CD-SSB symbol may be invalidated. Configured CD-SSB symbols are expected to be located in downlink symbols, and, if they overlap with a configured flexible symbol, the configured flexible symbol will be marked as a downlink symbol.

Similarly, random access channel (RACH) occasions are expected to fall within uplink symbols. If a configured RACH occasion happens to overlap with a configured downlink symbol or an SSB symbol, the RACH occasion may be invalidated. When configured RACH occasions overlap with a configured flexible symbols, the configured flexible symbol will be marked as an uplink symbol and the RACH occasion validated.

The marking and validating of CD-SSB symbols has been provided for in the technical specifications (TS), such as in Rel-17 TS 38.213. Rel-17 TS 38.213 provides, for operation on a single carrier in unpaired spectrum, for a set of symbols of a slot indicated to a UE for reception of SSBs via SSB configuration messages (e.g., such as by the *ssb-PositionsInBurst* field in *SIB1* or by the *ssb-PositionsInBurst* field in *ServingCellConfigCommon)* or, if the UE is not provided transmission configuration information (TCI) parameters (e.g., such as via the *DLorJoint-TCIState* or *follow UnifiedTCIstate* parameters, or by the *ssb-PositionsInBurst* field in the *SSB-MTCAdditionalPCI* parameter associated to a physical cell identifier (ID) with active TCI states), the UE would not transmit PUSCH, PUCCH, or PRACH in the slot if a transmission would overlap with any symbol from the set of symbols, and the UE does not transmit sounding reference signal (SRS) in the set of symbols of the slot. The UE would not expect the set of symbols of the slot to be indicated as uplink by the uplink-downlink symbol configuration when provided to the UE.

Rel-17 TS 38.213 further provides that when a UE is not provided the uplink-downlink symbol configuration, a physical random access channel (PRACH) occasion in a PRACH slot may be valid if it does not precede an SSB (including a CD-SSB or NCD-SSB) in the PRACH slot and starts at least a predefined number of symbols, *N*_{gap}, after a last SSB reception symbol. The predefined value of *N*_{gap} may be provided in table, which may be stored by the UE or communicated to the UE by the network. The candidate SSB index of the SSB may correspond to the SSB index provided by the SSB configuration messages. When a UE is provided an uplink-downlink symbol configuration, a PRACH occasion in a PRACH slot may be valid if it falls within configured uplink symbols, or it does not precede a SSB (including a CD-SSB or NCD-SSB) in the PRACH slot and starts at least *N*_{gap} symbols after a last downlink symbol and at least *N*_{gap} symbols after a last SSB symbol, as noted above. Again, in the context of the UE receiving the uplink-downlink symbol configuration, the candidate SSB index of the SSB may correspond to the SSB index provided by the SSB configuration messages.

The various examples and aspects described herein support marking and validating NCD-SSB and RACH occasions based on the combination of NCD-SSB and CD-SSB configurations according to aspects of the present disclosure.

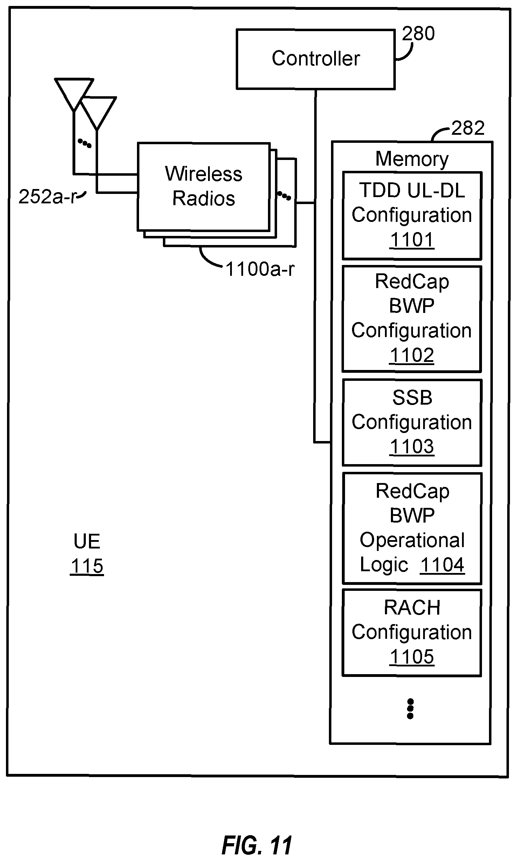

FIG. 4 is a flow diagram illustrating an example process 40 that supports marking symbols and validation of NCD-SSB according to one or more aspects. Operations of process 40 may be performed by a UE, such as UE 115 described above with reference to FIGs. 1 and 2, or a UE described with reference to FIG. 11. FIG. 11 is a block diagram illustrating an example UE configured to support marking symbols and validation of NCD-SSB according to one or more aspects. For example, example operations (also referred to as "blocks") of process 40 may enable UE 115 to support marking symbols and validation of NCD-SSB for RedCap UE operations.

As shown, memory 282 may include TDD uplink-downlink configuration 1101, RedCap BWP configuration 1102, SSB configuration 1103, and RedCap BWP operational logic 1104. TDD uplink-downlink configuration 1101 stores the configuration sequence of uplink, downlink, and flexible symbols for one or more slots. RedCap BWP configuration 1102 stores the configuration information for a RedCap BWP for a window of frequencies within the carrier bandwidth. SSB configuration 1103 stores the configuration information for SSB transmissions, including the frequency of CD-SSB transmissions and the frequency of NCD-SSB transmissions and any offset information reflecting the number of symbols between a CD-SSB transmission and the NCD-SSB transmission. RedCap BWP operational logic 1104 may be configured to provide functionality to a UE, such as UE 115, for using either CD-SSB symbols or NCD-SSB symbols for marking and validating NCD-SSB transmissions. UE 115 may receive signals from or transmit signals to one or more network entities, such as network entity 105 or base station 140 of FIGs. 1-2.

In block 400, a UE, such as UE 115, obtains a TDD uplink-downlink symbol configuration identifies a pattern of uplink symbols, downlink symbols, and flexible symbols over one or more slots of a carrier bandwidth. A UE, such as UE 115, may receive configuration information for the uplink-downlink symbol sequence for one or more upcoming slots. UE 115 would receive such configuration information, for example, via radio resource control (RRC) signaling via antennas 252a-r and wireless radios 1100a-r. UE 115 would store such configuration information at TDD uplink-downlink configuration 1101 in memory 282.

In block 401, the UE receives a bandwidth configuration identifying a BWP allocated to the UE within the carrier bandwidth, wherein the BWP is in a frequency window of the carrier bandwidth. UE 115 may be a RedCap UE or may be a UE having regular bandwidth capabilities. UE 115 may further receive configuration signals, such as via RRC signaling and the like, which allocates a BWP, which may be a RedCap-specific BWP, within the carrier bandwidth of the network and that configures the frequency of CD-SSB transmissions. The BWP configuration is stored in memory 282 at RedCap BWP configuration 1102 and the CD-SSB transmission configuration is stored in memory 282 at SSB configuration 1103. UE 115 would receive such configuration information, for example, via RRC signaling via antennas 252a-r and wireless radios 1100a-r.

In block 402, the UE receives a NCD-SSB configuration identifying at least a frequency of NCD-SSB transmissions and a time offset of the NCD-SSB transmissions from the CD-SSB transmissions. Additional configuration information received by UE 115 may further include configuration of NCD-SSB transmissions. Such configuration information includes parameters such as the frequency of transmissions and a time offset of the NCD-SSB transmissions relative to CD-SSB transmissions. UE 115 would receive such configuration information, for example, via radio resource control (RRC) signaling via antennas 252a-r and wireless radios 1100a-r and store it at SSB configuration 1103.

In block 403, the UE marks a configured flexible symbol of the TDD uplink-downlink symbol configuration as a downlink symbol in response to one or more of an NCD-SSB symbol of the NCD-SSB transmissions or a CD-SSB symbol of the CD-SSB transmissions overlapping with the configured flexible symbol. When operating within RedCap-specific BWPs, a UE, such as UE 115, may execute, under control of controller 280, RedCap BWP operational logic 1104. When executing the instructions and code underlying RedCap BWP operational logic 1104 by controller 280, referred to herein as the "execution environment" of RedCap BWP operational logic 1104, enables and implements functionality of UE 115 for executing the aspects of the present disclosure. Specifically, the execution environment of RedCap BWP operational logic 1104 allows UE 115 to mark a configured flexible symbols as a downlink symbols when an NCD-SSB symbol or a CD-SSB symbol overlaps with the configured flexible symbol.

As described with reference to FIG. 4, the present disclosure provides techniques for marking symbols and validation of NCD-SSB. Because RedCap-specific BWPs may not include CD-SSB transmissions, the additional use of NCD-SSB symbols may assist UEs for beam mobility (e.g., RLM/ BFD/ RACH, etc.) and timing operations.

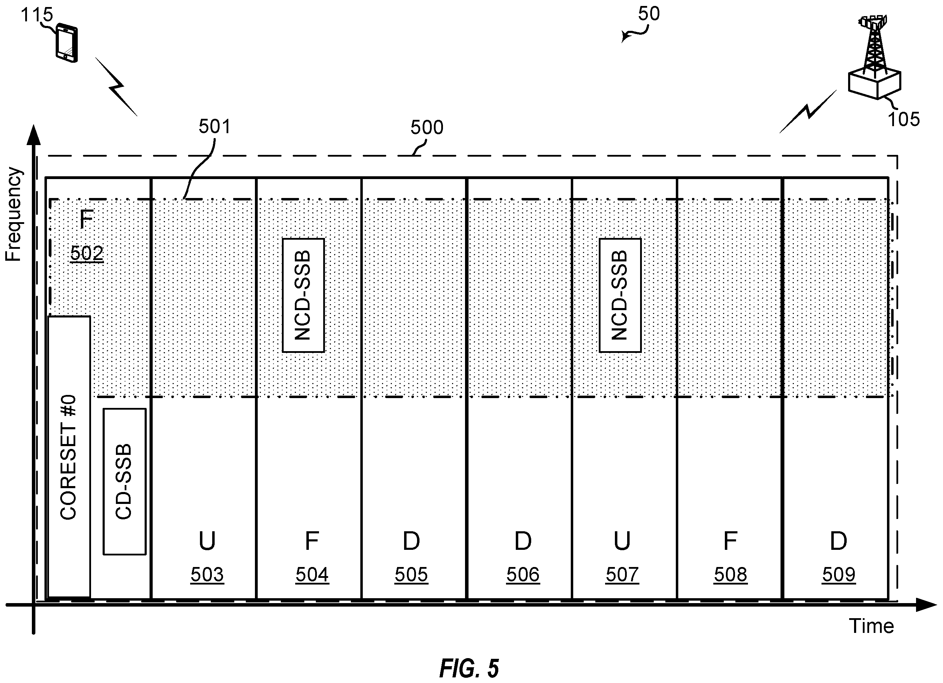

FIG. 5 is a diagram illustrating 5G NR network 50 configured to support marking symbols and validation of NCD-SSB according to aspects of the present disclosure. A UE, such as UE 115, identifies a RedCap-specific BWP 501 for communications in 5G NR network 40. UE 115 may be a RedCap UE or may be a UE with regular bandwidth capabilities. UE 115 identifies RedCap-specific BWP 501 either as an initial access BWP via common network configuration or a dedicated BWP via dedicated configuration messaging. RedCap-specific BWP 501 includes a portion of the bandwidth of carrier bandwidth 500 of 5G NR network 50. UE 115 may also obtain a TDD uplink-downlink symbol configuration from network entity 105, which identifies the sequence of symbols 502-509 and the configured type of symbol (e.g., downlink (D), uplink (U), flexible (F)).

While UE 115 may conduct RedCap-type communications via RedCap-specific BWP 501, common control transmissions, such as CD-SSB and CORESET#0 are mostly located within carrier bandwidth 500 outside of RedCap-specific BWP 501. Accordingly, if UE 115 is not capable of tuning outside of the bandwidth of RedCap-specific BWP 501, it cannot use the CORESET and synchronization information to access and communicate via 5G NR network 50. UE 115 may further receive configuration of NCD-SSBs that will be transmitted within RedCap-specific BWP 501. Thus, UE 115 may receive the mobility, synchronization, and access information through valid NCD-SSB transmissions within RedCap-specific BWP 501.

In a first optional implementation, configured flexible symbols within the TDD uplink-downlink symbol configuration may be marked according to either NCD-SSB symbols or CD-SSB symbols. As illustrated in FIG. 5, the CD-SSB symbol overlaps with symbol 502 and the first illustrated NCD-SSB symbol overlaps with symbol 504, both of which are configured as flexible symbols (F). In the first optional implementation UE 115 includes the capability to tune outside of the bandwidth of RedCap-specific BWP 501 during configured network gaps. As such, UE 115 may mark symbol 502, configured as a flexible symbol, as a downlink symbol in response to identifying the overlap of symbol 502 with the CD-SSB. Similarly, UE 115 may mark symbol 504, configured as a flexible symbol, as a downlink symbol in response to identifying the overlap of symbol 504 with the NCD-SSB.

In a second optional implementation, configured flexible symbols within the TDD uplink-downlink symbol configuration may be marked according to NCD-SSB symbols and not CD-SSB symbols. In the second optional implementation, UE 115 may not have the capability to tune outside of the bandwidth of RedCap-specific BWP 501, and, thus, may not be capable of detecting the CD-SSB overlapping with symbol 502, as it is located in the carrier bandwidth 500 outside of the bandwidth of RedCap-specific BWP 501. UE 115 will maintain symbol 502 as the configured flexible-type symbol. However, at symbol 504, UE 115 will mark symbol 504, which was configured as a flexible symbol, as a downlink symbol in response to NCD-SSB overlapping with symbol 504.

In a third optional implementation, UE 115 has the capability of tuning outside of RedCap-specific BWP 501 to detect CD-SSB in symbol 502. Thus, because of this capability, UE 115 may use CD-SSBs to mark overlapping symbols. As illustrated in FIG. 5, UE 115, within the third optional implementation, will mark symbol 502, which was configured as a flexible symbol, as a downlink symbol in response to CD-SSB overlapping with symbol 502. Because UE 115 may detect and use CD-SSBs outside of RedCap-specific BWP 501, it would not be necessary for UE 115 to use the NCD-SSB within RedCap-specific BWP 501.

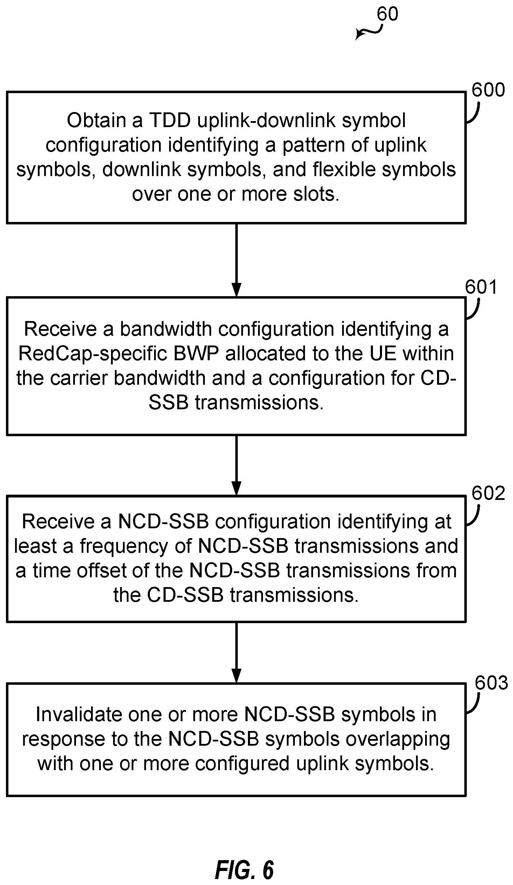

FIG. 6 is a flow diagram illustrating an example process 60 that supports marking symbols and validation of NCD-SSB according to one or more aspects. Operations of process 60 may be performed by a UE, such as UE 115 described above with reference to FIGs. 1 and 2, or a UE described with reference to FIG. 11. For example, example operations (also referred to as "blocks") of process 60 may enable UE 115 to support marking symbols and validation of NCD-SSB.

In block 600, a UE, such as UE 115, obtains a TDD uplink-downlink symbol configuration, wherein the TDD uplink-downlink symbol configuration identifies a pattern of uplink symbols, downlink symbols, and flexible symbols over one or more slots of a carrier bandwidth. UE 115 may be a RedCap UE or may be a UE having regular bandwidth capabilities. As noted above, a UE, such as UE 115, may receive configuration information for the uplink-downlink symbol sequence for one or more upcoming slots. UE 115 would receive such configuration information, for example, via radio resource control (RRC) signaling via antennas 252a-r and wireless radios 1100a-r. UE 115 would store such configuration information at TDD uplink-downlink configuration 1101 in memory 282.

In block 601, the UE receives a bandwidth configuration identifying a RedCap-specific BWP allocated to the UE within the carrier bandwidth, wherein the RedCap-specific BWP is in a frequency window of the carrier bandwidth and a configuration for CD-SSB transmissions. Also as noted above, UE 115 may further receive configuration signals, such as via RRC signaling and the like, which allocates a RedCap-specific BWP within the carrier bandwidth of the network and that configures the frequency of CD-SSB transmissions. The RedCap-specific BWP configuration is stored in memory 282 at RedCap BWP configuration 1102 and the CD-SSB transmission configuration is stored in memory 282 at SSB configuration 1103. UE 115 would receive such configuration information, for example, via radio resource control (RRC) signaling via antennas 252a-r and wireless radios 1100a-r.

In block 602, the UE receives NCD-SSB configuration identifying at least a frequency of NCD-SSB transmissions and a time offset of the NCD-SSB transmissions from the CD-SSB transmissions. Also as noted above, additional configuration information received by UE 115 may further include configuration of NCD-SSB transmissions. Such configuration information includes parameters such as the frequency of transmissions and a time offset of the NCD-SSB transmissions relative to CD-SSB transmissions. UE 115 would receive such configuration information, for example, via RRC signaling via antennas 252a-r and wireless radios 1100a-r and store it at SSB configuration 1103.

In block 603, the UE invalidates one or more NCD-SSB symbols of a plurality of NCD-SSB symbols scheduled according to the NCD-SSB configuration in response to the one or more NCD-SSB symbols overlapping with one or more configured uplink symbols of the TDD uplink-downlink symbol configuration. The execution environment of RedCap BWP operational logic 1104 allows UE 115 to invalidate one or more NCD-SSB symbols when the one or more NCD-SSB symbols overlap with one or more configured uplink symbols.

As described with reference to FIG. 6, the present disclosure provides techniques for marking symbols and validation of NCD-SSB. Because RedCap-specific BWPs may not include CD-SSB transmissions, the additional use of NCD-SSB symbols may assist UEs for beam mobility (e.g., RLM/ BFD/ RACH, etc.) and timing operations.

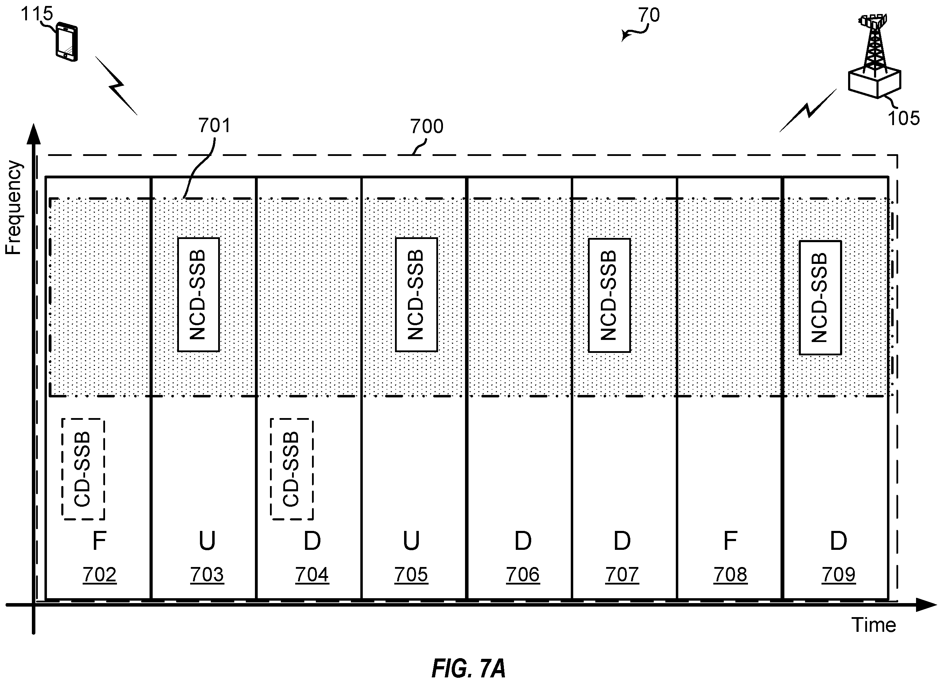

FIG. 7A is a diagram illustrating 5G NR network 70 configured to support marking symbols and validation of NCD-SSB according to aspects of the present disclosure. A UE, such as UE 115, obtains a configuration for RedCap-specific BWP 701 for communications in 5G NR network 70 within carrier bandwidth 700. UE 115 may be a RedCap UE or may be a UE having regular bandwidth capabilities. RedCap-specific BWP 701 includes a portion of the bandwidth of carrier bandwidth 700. UE 115 may also obtain a TDD uplink-downlink symbol configuration from network entity 105, which identifies the sequence of symbols 702-709 and the configured type of symbol (e.g., downlink (D), uplink (U), flexible (F)).

As noted above, UE 115, as a RedCap device, may have limited bandwidth capabilities which can be accommodated using the dedicated BWP, RedCap-specific BWP 701. UE 115 may or may not have the capability to tune outside of RedCap-specific BWP 701 into the remaining bandwidth of carrier bandwidth 700. For RedCap UEs that do not have such capabilities, they may not be able to detect and receive common control transmissions, such as CD-SSB and CORESET#0. The network, via network entity 105, may transmit NCD-SSB within RedCap-specific BWP 701 that can be used for various tasks, such as beam mobility (e.g., RLM/ BFD/ RACH, etc.) and timing. UE 115 may obtain configuration of such NCD-SSB transmissions within RedCap-specific BWP 701 for mobility, synchronization, and access information.

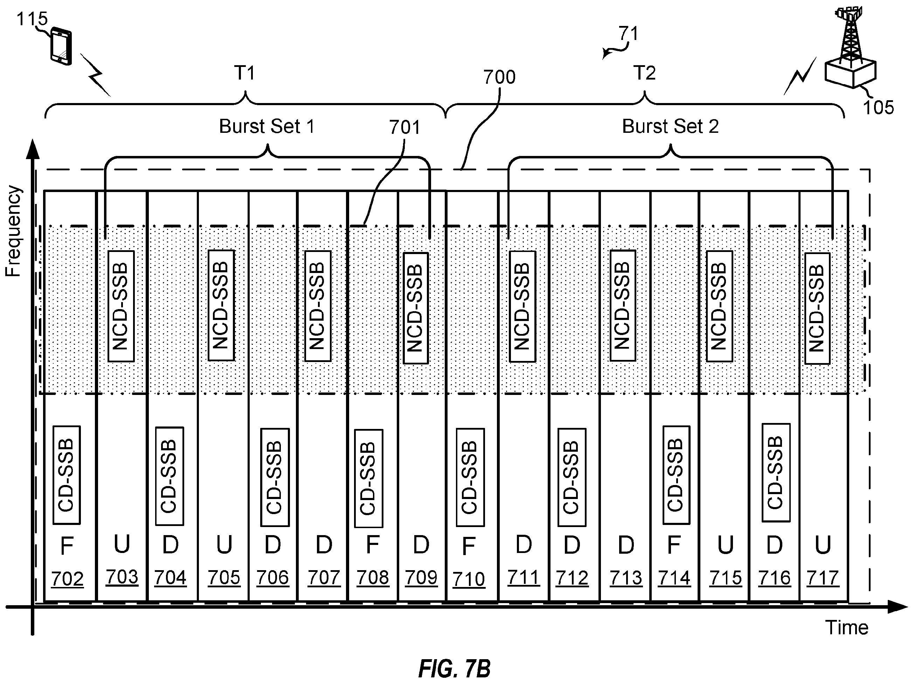

NCD-SSB are expected to overlap with configured downlink symbols or configured flexible symbols in certain circumstances. However, a UE, such as UE 115, would not expect an NCD-SSB transmission to overlap with a configured uplink symbol. In fact, NCD-SSB symbols that overlap with configured uplink symbols may be invalidated in response to the NCD-SSB symbol overlapping with a configured uplink symbol. As illustrated in FIG. 7, an NCD-SSB symbol overlaps with symbols 703, 705, 707, and 709. Of these symbols, the TDD uplink-downlink symbol configuration has configured symbols 703 and 705 as uplink (U) symbols. UE 115 may then invalidate the NCD-SSB symbols that overlap with the configured uplink symbols in symbols 703 and 705 and potentially other NCD-SSBs.

In a first optional implementation, if any NCD-SSB symbol in configured burst set of NCD-SSB transmissions overlaps with a configured uplink symbol, the entire configuration of the burst set will be determined invalid by UE 115. For example, upon determining that the NCD-SSB symbol overlaps with the configured uplink symbol of symbol 703, UE 115 invalidates the entire configured NCD-SSB burst set including the NCD-SSB transmissions in all of symbols 703, 705, 707, and 709.

In a second optional implementation, UE 115 may invalidate the NCD-SSB symbols in an NCD-SSB burst set that overlap with configured uplink symbols, but may maintain the remaining NCD-SSB symbols of the burst set that do not overlap uplink symbols as valid. For example, as illustrated, an NCD-SSB burst set includes NCD-SSB symbols in symbols 703, 705, 707, and 709. UE 115 may invalidate the NCD-SSB symbols overlapping with configured uplink symbols of symbols 703 and 705, but validate the NCD-SSB symbols overlapping with the configured downlink symbols of symbols 707 and 709.

It should be noted that the second optional implementation may be utilized by RedCap UEs having the capability to tune outside of RedCap-specific BWP 701 to detect CD-SSB transmission within the remaining bandwidth of carrier bandwidth 700. Thus, the SSB indices of the invalidated NCB-SSB symbols may be replaced by corresponding SSB indices of CD-SSB symbols in a gap for UE 115 to tune outside of RedCap-specific BWP 701, such as the CD-SSB symbols overlapping with the configured downlink symbols of symbols 702 and 704. UE 115 will use the valid NCD-SSB symbols overlapping with the configured downlink symbols of symbols 707 and 709 for the remaining SSB indices.

FIG. 7B is a diagram illustrating an extended time period of 5G NR network 71 configured to support marking symbols and validation of NCD-SSB according to aspects of the present disclosure. The time period of 5G NR network 71 of FIG. 7B includes operations over a longer time period than the time period of 5G NR network 70 depicted in FIG. 7A. The duration of 5G NR network 71 depicted in FIG. 7B includes operations over time period T1, which encompasses the operations illustrated in FIG. 7A, and time period T2, which includes symbols 710 - 717. The TDD uplink-downlink symbol configuration received by UE 115 from network entity 105 includes the sequence of symbol types over the symbols 702-717. The NCD-SSB configuration defines a first burst set of NCD-SSB transmissions in time period T1, burst set 1, and a second burst set of NCD-SSB transmissions in timer period T2, burst set 2.

It is possible that the overlap between NCD-SSB symbols of a burst set and a configured uplink symbol may vary in time. For example, in burst set 1 of time period T1, the first set of NCD-SSB symbols in burst set 1 overlap with the configured uplink symbols of symbols 703 and 705, and are therefore invalidated by UE 115, while the second set of NCD-SSB symbols in burst set 1 are valid, overlapping with configured downlink symbols of symbols 707 and 709. In contrast, in burst set 2 of time period T2, the first set of NCD-SSB symbols are valid, overlapping with configured downlink symbols of symbols 711 and 713, while the second set of NCD-SSB symbols in burst set 2 overlap with configured uplink symbols of symbols 715 and 717, and are therefore invalidated by UE 115. In time period T1, UE 115 will monitor CD-SSB symbols outside of RedCap-specific BWP 701 corresponding to the first subset of SSB indices and monitor the NCD-SSB symbols within RedCap-specific BWP 701 corresponding to the second subset of SSB indices. Conversely, in time period T2, UE 115 will monitor the NCD-SSB symbols within RedCap-specific BWP 701 corresponding to the first subset of SSB indices and monitor CD-SSB symbols outside of RedCap-specific BWP 701 corresponding to the second subset of SSB indices.

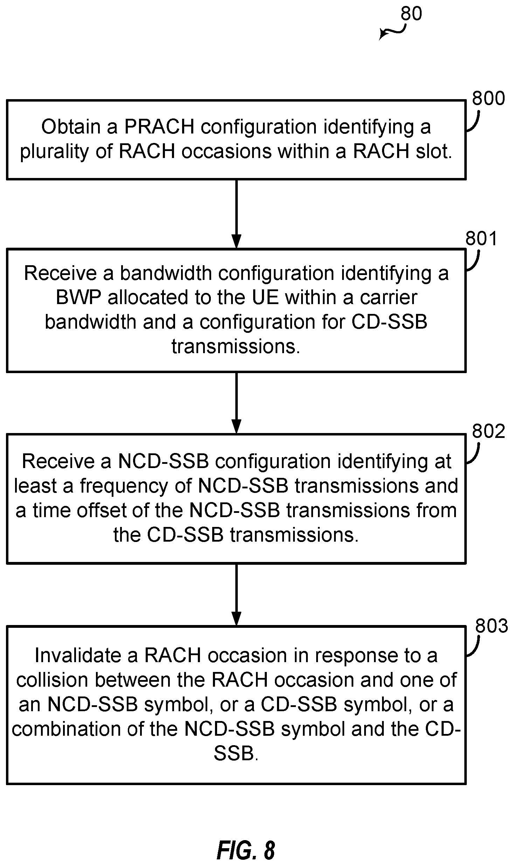

FIG. 8 is a flow diagram illustrating an example process 80 that supports marking symbols and validation of NCD-SSB according to one or more aspects. Operations of process 80 may be performed by a UE, such as UE 115 described above with reference to FIGs. 1 and 2, or a UE described with reference to FIG. 11. For example, example operations (also referred to as "blocks") of process 80 may enable UE 115 to support marking symbols and validation of NCD-SSB.

As shown, memory 282 may also include RACH configuration 1105. RACH configuration 1105 stores the configuration for RACH slots and the RACH occasions within the RACH slots.

In block 800, a UE, such as UE 115, obtains PRACH configuration, wherein the PRACH configuration identifies a plurality of RACH occasions within a RACH slot. UE 115 may be a RedCap UE or may be a UE having regular bandwidth capabilities. As noted above, a UE, such as UE 115, may receive configuration information for the uplink-downlink symbol sequence for one or more upcoming slots. UE 115 would receive such configuration information, for example, via radio resource control (RRC) signaling via antennas 252a-r and wireless radios 1100a-r. UE 115 would store such configuration information at TDD uplink-downlink configuration 1101 in memory 282.

In block 801, the UE receives a bandwidth configuration identifying a BWP allocated to the UE within a carrier bandwidth, wherein the BWP is in a frequency window of the carrier bandwidth. Also as noted above, UE 115 may further receive configuration signals, such as via RRC signaling and the like, which allocates a BWP, which may be a RedCap-specific BWP, within the carrier bandwidth of the network and that configures the frequency of CD-SSB transmissions. The BWP configuration is stored in memory 282 at RedCap BWP configuration 1102 and the CD-SSB transmission configuration is stored in memory 282 at SSB configuration 1103. UE 115 would receive such configuration information, for example, via radio resource control (RRC) signaling via antennas 252a-r and wireless radios 1100a-r.

In block 802, the UE receives NCD-SSB configuration identifying at least a frequency of NCD-SSB transmissions and a time offset of the NCD-SSB transmissions from the CD-SSB transmissions. Also as noted above, additional configuration information received by UE 115 may further include configuration of NCD-SSB transmissions. Such configuration information includes parameters such as the frequency of transmissions and a time offset of the NCD-SSB transmissions relative to CD-SSB transmissions. UE 115 would receive such configuration information, for example, via RRC signaling via antennas 252a-r and wireless radios 1100a-r and store it at SSB configuration 1103.

In block 803, the UE invalidates a RACH occasion of the plurality of RACH occasions in response to a collision between the RACH occasion and one of an NCD-SSB symbol of the NCD-SSB transmissions, or a CD-SSB symbol of the CD-SSB transmissions, or a combination of the NCD-SSB symbol and the CD-SSB symbol. The execution environment of RedCap BWP operational logic 1104 allows UE 115 to invalidate one or more RACH occasions when the RACH occasions collide with an NCD-SSB symbol, a CD-SSB symbols, or a combination of NCD-SSB symbols and CD-SSB symbols.

As described with reference to FIG. 8, the present disclosure provides techniques for marking validation of RACH occasions. Because RedCap-specific BWPs may not include CD-SSB transmissions, the additional use of NCD-SSB symbols may assist UEs for beam mobility (e.g., RLM/ BFD/ RACH, etc.) and timing operations.

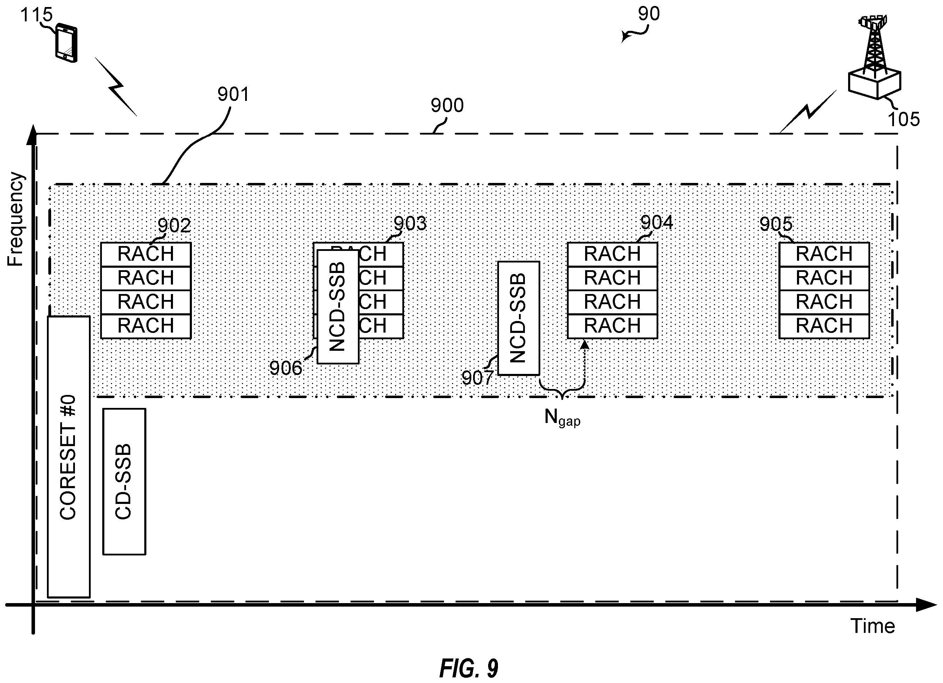

FIG. 9 is a diagram illustrating 5G NR network 90 configured to support validation of RACH occasions according to aspects of the present disclosure. A UE, such as UE 115, obtains a configuration for RedCap-specific BWP 901 for communications in 5G NR network 90 within carrier bandwidth 900. UE 115 may be a RedCap UE or may be a UE having regular bandwidth capabilities. RedCap-specific BWP 901 includes a portion of the bandwidth of carrier bandwidth 900. As noted above, UE 115, as a RedCap device, may or may not have the capability to tune outside of RedCap-specific BWP 901 into the remaining bandwidth of carrier bandwidth 900. RedCap UEs that do not have such capabilities may not be able to detect CD-SSB and CORESET#0. Therefore, the network, via network entity 105, may transmit NCD-SSB within RedCap-specific BWP 901 that can be used for tasks, such as beam mobility (e.g., RLM/ BFD/ RACH, etc.) and timing. UE 115 may obtain configuration of such NCD-SSB transmissions within RedCap-specific BWP 901 for mobility, synchronization, and access information. Additionally, UE 115 receives configuration for multiple RACH occasions, such as RACH occasions 902-905.

As noted previously, valid RACH occasions are considered uplink symbols, whether they overlap with configured uplink symbols or overlap with configured flexible symbols. However, RACH occasions that overlap with downlink symbols and SSB symbols will be invalidated. Because RedCap-specific BWP 901 may include NCD-SSB transmissions but not CD-SSB transmissions, aspects of the present disclosure may provide for validation for RACH occasions using either NCD-SSB transmissions or CD-SSB transmissions, depending on the capabilities of the RedCap UE, such as UE 115.

In a first optional aspect, UE 115 is a UE having regular bandwidth capabilities or is a RedCap UE capable of tuning outside of RedCap-specific BWP 901. With such capability, UE 115 may invalidate RACH occasions using either CD-SSB symbols or NCD-SSB symbols. For example, UE 115 may tune outside of RedCap-specific BWP 901 to detect the CD-SSB symbol overlapping with RACH occasion 902. UE 115 also detects NCD-SSB symbol 906 which overlaps with RACH occasion 903. UE 115 may then invalidate RACH occasions 902 and 903 because of the collision with the CD-SSB symbol and NCD-SSB symbol 906. As noted previously, RACH occasions may further be invalidated where the RACH occasion is located within a predefined number of symbols, N_{gap}, from the end of the last SSB symbol. Therefore, UE 115 may also invalidate RACH occasion 904 because RACH occasion 904 is located within N_{gap} symbols from the end of NCD-SSB symbol 907.

In a second optional aspect, UE 115 is not capable of tuning outside of RedCap-specific BWP 901. In such a scenario, UE 115 may invalidate RACH occasions when the RACH occasion collides with NCD-SSB symbols and not CD-SSB symbols, where a collision occurs either when the RACH occasion overlaps with the NCD-SSB symbol or the RACH occasion is located within N_{gap} symbols of the end of the NCD-SSB symbol. For example, under the second optional aspect, UE 115 may invalidate RACH occasions 903 and 904 because those occasions collide with NCD-SSB symbols 906 and 907, where the collisions include RACH occasion 903 overlapping with NCD-SSB symbol 906 and RACH occasion 904 being located within N_{gap} from the end of NCD-SSB symbol 907.

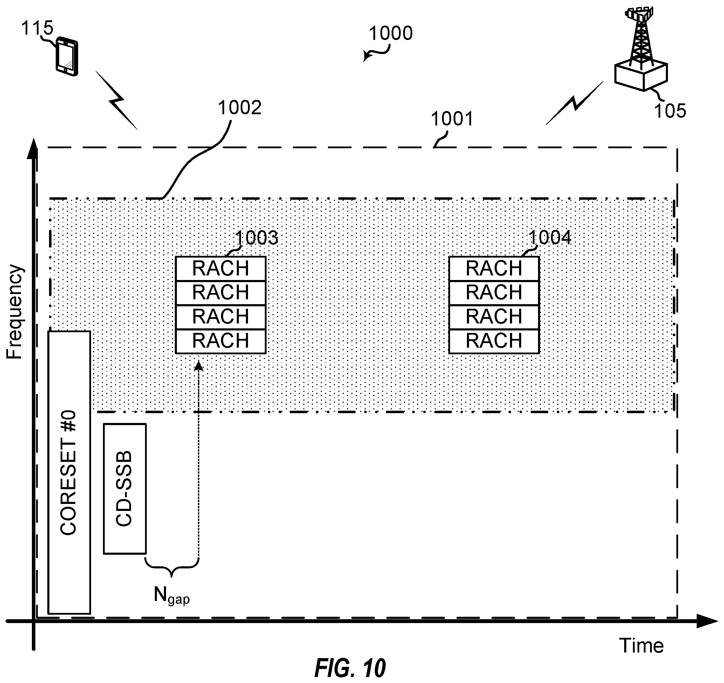

FIG. 10 is a diagram illustrating 5G NR network 1000 configured to support validation of RACH occasions according to aspects of the present disclosure. During initial access, a RedCap UE, such as UE 115, may obtain a common dedicated initial RedCap-specific BWP 1002. UE 115 may be a RedCap UE or may be a UE having regular bandwidth capabilities. Because of the initial access, UE 115 may not be configured with NCD-SSB transmissions. In such an instance, UE 115 may validate common RACH occasions 1003 and 1004 using the CD-SSB transmissions within carrier bandwidth 1001 outside of common dedicated initial RedCap-specific BWP 1002. In the illustrated example, UE 115 would have the capability to tune outside of common dedicated initial RedCap-specific BWP 1002 to detect the CD-SSB transmission. For example, UE 115 may identify a collision between RACH occasion 1003 and the CD-SSB symbol as the RACH occasion is located within N_{gap} of the end of the CD-SSB symbol. UE would then consider RACH occasion 1004 to be valid.

After initial access, a UE may obtain a dedicated RedCap-specific BWP with a configuration of NCD-SSB transmissions. In such a scenario, the UE may use either both CD-SSB transmissions and NCD-SSB transmissions, when capable of tuning outside of the dedicated RedCap-specific BWP, or NCD-SSB transmissions within the dedicated RedCap-specific BWP when UE 115 does not have the capability to tune out of its dedicated BWP. Referring back to FIG. 9, RedCap-specific BWP 901 may be a dedicated RedCap-specific BWP, thus, if UE 115 is a UE having regular bandwidth capabilities or is a RedCap UE capable of tuning outside of RedCap-specific BWP 901, it would invalidate dedicated RACH occasions, such as RACH occasions 902, 903, and 904, as described above with respect to FIG. 9, for collisions with the CD-SSB symbol and NCD-SSB symbols 906 and 907. Alternatively, if UE 115 is not capable of tuning outside of RedCap-specific BWP 901, UE 115 would invalidate RACH occasions 903 and 904, as described above with respect to FIG. 9, for collisions with NCD-SSB symbols 906 and 907.

In one or more aspects, techniques for supporting marking symbols and validation of NCD-SSB and RACH occasions may include additional aspects, such as any single aspect or any combination of aspects described below or in connection with one or more other processes or devices described elsewhere herein. In a first aspect, supporting marking symbols and validation of NCD-SSB and RACH occasions may include a UE configured to obtain a TDD uplink-downlink symbol configuration, wherein the TDD uplink-downlink symbol configuration identifies a pattern of uplink symbols, downlink symbols, and flexible symbols over one or more slots of a carrier bandwidth, receiving a bandwidth configuration identifying a RedCap-specific BWP allocated to the UE within the carrier bandwidth and a configuration for CD-SSB transmissions, receiving a NCD-SSB configuration identifying at least a frequency of NCD-SSB transmissions and a time offset of the NCD-SSB transmissions from the CD-SSB transmissions, and marking a configured flexible symbol of the TDD uplink-downlink symbol configuration as a downlink symbol in response to one or more of an NCD-SSB symbol of the NCD-SSB transmissions or a CD-SSB symbol of the CD-SSB transmissions overlapping with the configured flexible symbol.

Additionally, the UE may perform or operate according to one or more aspects as described below. A first aspect may include a UE configured for wireless communication that includes obtaining a TDD uplink-downlink symbol configuration, wherein the TDD uplink-downlink symbol configuration identifies a pattern of uplink symbols, downlink symbols, and flexible symbols over one or more slots of a carrier bandwidth, receiving a bandwidth configuration identifying a BWP allocated to the UE within the carrier bandwidth and a configuration for CD-SSB transmissions, receiving a NCD-SSB configuration identifying at least a frequency of NCD-SSB transmissions and a time offset of the NCD-SSB transmissions from the CD-SSB transmissions, and marking a configured flexible symbol of the TDD uplink-downlink symbol configuration as a downlink symbol in response to one or more of an NCD-SSB symbol of the NCD-SSB transmissions or a CD-SSB symbol of the CD-SSB transmissions overlapping with the configured flexible symbol. Some implementation may include a processor coupled to memory having computer code thereon that enables the functionality when executed by the processor. The processor may be configured to perform operations described herein with respect to the apparatus. In some other implementations, the UE may include a non-transitory computer-readable medium having program code recorded thereon and the program code may be executable by a computer for causing the computer to perform operations described herein with reference to the UE. In some implementations, the UE may include one or more means configured to perform operations described herein. In some implementations, a method of wireless communication may include one or more operations described herein with reference to the UE.

In a second aspect, alone or in combination with the first aspect, wherein the marking includes marking the configured flexible symbol as the downlink symbol in response to the CD-SSB symbol or the NCD-SSB symbol overlapping with the configured flexible symbol.

In a third aspect, alone or in combination with one or more of the first aspect or the second aspect, wherein the marking includes marking the configured flexible symbol as the downlink symbol in response to the NCD-SSB symbol, but not in response to the CD-SSB symbol, overlapping with the configured flexible symbol.

In a fourth aspect, alone or in combination with one or more of the first aspect through the third aspect, wherein the marking includes marking the configured flexible symbol as the downlink symbol in response to the CD-SSB symbol, but not in response to the NCD-SSB symbol, overlapping with the configured flexible symbol.

In a fifth aspect, alone or in combination with one or more of the first aspect through the fourth aspect, wherein the UE includes a RedCap UE having reduced capacity, and wherein the RedCap UE is one of: capable of tuning outside of the RedCap-specific BWP, or incapable of tuning outside of the RedCap-specific BWP.

A sixth aspect of wireless communication performed by a UE may include obtaining a TDD uplink-downlink symbol configuration, wherein the TDD uplink-downlink symbol configuration identifies a pattern of uplink symbols, downlink symbols, and flexible symbols over one or more slots of a carrier bandwidth; receiving a bandwidth configuration identifying a RedCap-specific BWP allocated to the UE within the carrier bandwidth and a configuration for CD-SSB transmissions; receiving a NCD-SSB configuration identifying at least a frequency of NCD-SSB transmissions and a time offset of the NCD-SSB transmissions from the CD-SSB transmissions; and invalidating one or more NCD-SSB symbols of a plurality of NCD-SSB symbols scheduled according to the NCD-SSB configuration in response to the one or more NCD-SSB symbols overlapping with one or more configured uplink symbols of the TDD uplink-downlink symbol configuration.

In a seventh aspect, alone or in combination with the sixth aspect, wherein the invalidating includes: invalidating the plurality of NCD-SSB symbols in response to one NCD-SSB symbol of the plurality of NCD-SSB symbols overlapping with one configured uplink symbol of the one or more configured uplink symbols.

In an eighth aspect alone or in combination with one or more of the sixth aspect or the seventh aspect, further including: validating one or more valid NCD-SSB symbols not overlapping with the one or more configured uplink symbols, wherein the invalidating includes invalidating the one or more NCD-SSB symbols in response to each of the one or more NCD-SSB symbols overlapping with the one or more configured uplink symbols.

In a ninth aspect, alone or in combination with one or more of the sixth aspect through the eighth aspect, further including: monitoring the one or more valid NCD-SSB symbols for a first set of SSB indices; and monitoring one or more CD-SSB symbols outside of the RedCap-specific BWP for a second set of SSB indices, wherein the second set of SSB indices correspond to one or more SSB indices associated with the invalidated one or more NCD-SSB symbols.

In a tenth aspect, alone or in combination with one or more of the sixth aspect through the ninth aspect, wherein the UE includes a RedCap UE having reduced capacity, and wherein the RedCap UE is one of: capable of tuning outside of the RedCap-specific BWP, or incapable of tuning outside of the RedCap-specific BWP.

An eleventh aspect of wireless communication performed by a UE may include obtaining a PRACH configuration, wherein the PRACH configuration identifies a plurality of RACH occasions within a RACH slot; receiving a bandwidth configuration identifying a BWP allocated to the UE within a carrier bandwidth and a configuration for CD-SSB transmissions; receiving a NCD-SSB configuration identifying at least a frequency of NCD-SSB transmissions and a time offset of the NCD-SSB transmissions from the CD-SSB transmissions; and invalidating a RACH occasion of the plurality of RACH occasions in response to a collision between the RACH occasion and one of an NCD-SSB symbol of the NCD-SSB transmissions, or a CD-SSB symbol of the CD-SSB transmissions, or a combination of the NCD-SSB symbol and the CD-SSB symbol.

In a twelfth aspect, alone or in combination with the eleventh aspect, wherein the invalidating includes invalidating the RACH occasion in response to the collision between the RACH occasion and the NCD-SSB symbol.

In a thirteenth aspect, alone or in combination with one or more of the eleventh aspect or the twelfth aspect, wherein the BWP includes a RedCap-specific initial BWP and wherein the invalidating includes one of: invalidating the RACH occasion in response to the collision between the RACH occasion and one of the NCD-SSB symbol or the CD-SSB symbol, wherein the UE is capable of tuning outside of the BWP to detect the CD-SSB transmissions, or invalidating the RACH occasion in response to the collision between the RACH occasion and the NCD-SSB symbol.

In a fourteenth aspect, alone or in combination with one or more of the eleventh aspect through the thirteenth aspect, wherein the BWP includes a RedCap-specific initial BWP and the RACH occasion includes a common RACH occasion within the carrier bandwidth, and wherein the invalidating includes invalidating the RACH occasion in response to the collision between the RACH occasion and the CD-SSB symbol.

In a fifteenth aspect, alone or in combination with one or more of the eleventh aspect through the fourteenth aspect, wherein the collision corresponds to one of: the RACH occasion overlapping with the NCD-SSB symbol or the CD-SSB symbol, or the RACH occasion overlapping with spectrum within the BWP of a predefined number of symbols from an end of the one or more of the NCD-SSB symbol or the CD-SSB symbol; or the RACH occasion preceding a location of the NCD-SSB symbols or the CD-SSB symbol within a slot.

In a sixteenth aspect, alone or in combination with one or more of the eleventh aspect through the fifteenth aspect, wherein the UE includes a RedCap UE having reduced capacity, and wherein the RedCap UE is one of: capable of tuning outside of the BWP, or incapable of tuning outside of the BWP.

A seventeenth aspect may include a UE including a memory storing processor-readable code; and at least one processor coupled to the memory, the at least one processor configured to execute the processor-readable code to cause the at least one processor to: obtain a TDD uplink-downlink symbol configuration, wherein the TDD uplink-downlink symbol configuration identifies a pattern of uplink symbols, downlink symbols, and flexible symbols over one or more slots of a carrier bandwidth; receive a bandwidth configuration identifying a BWP allocated to the UE within the carrier bandwidth and a configuration for CD-SSB transmissions; receive a NCD-SSB configuration identifying at least a frequency of NCD-SSB transmissions and a time offset of the NCD-SSB transmissions from the CD-SSB transmissions; and mark a configured flexible symbol of the TDD uplink-downlink symbol configuration as a downlink symbol in response to one or more of an NCD-SSB symbol of the NCD-SSB transmissions or a CD-SSB symbol of the CD-SSB transmissions overlapping with the configured flexible symbol.

In an eighteenth aspect, alone or in combination with the seventeenth aspect, wherein the configuration of the at least one processor to mark includes configuration of the at least one processor to mark the configured flexible symbol as the downlink symbol in response to the CD-SSB symbol or the NCD-SSB symbol overlapping with the configured flexible symbol.

In a nineteenth aspect, alone or in combination with one or more of the seventeenth aspect or eighteenth aspect, wherein the configuration of the at least one processor to mark includes configuration of the at least one processor to mark the configured flexible symbol as the downlink symbol in response to the NCD-SSB symbol, but not in response to the CD-SSB symbol, overlapping with the configured flexible symbol.

In a twentieth aspect, alone or in combination with one or more of the seventeenth aspect though the nineteenth aspect, wherein the configuration of the at least one processor to mark includes configuration of the at least one processor to mark the configured flexible symbol as the downlink symbol in response to the CD-SSB symbol, but not in response to the NCD-SSB symbol, overlapping with the configured flexible symbol.

In a twenty-first aspect, alone or in combination with one or more of the seventeenth aspect though the twentieth aspect, wherein the UE includes a RedCap UE having reduced capacity, and wherein the RedCap UE is one of: capable of tuning outside of the BWP, or incapable of tuning outside of the BWP.

A twenty-second aspect may include a UE including a memory storing processor-readable code; and at least one processor coupled to the memory, the at least one processor configured to execute the processor-readable code to cause the at least one processor to: obtain a TDD uplink-downlink symbol configuration, wherein the TDD uplink-downlink symbol configuration identifies a pattern of uplink symbols, downlink symbols, and flexible symbols over one or more slots of a carrier bandwidth; receive a bandwidth configuration identifying a RedCap-specific BWP allocated to the UE within the carrier bandwidth and a configuration for CD-SSB transmissions; receive a NCD-SSB configuration identifying at least a frequency of NCD-SSB transmissions and a time offset of the NCD-SSB transmissions from the CD-SSB transmissions; and invalidate one or more NCD-SSB symbols of a plurality of NCD-SSB symbols scheduled according to the NCD-SSB configuration in response to the one or more NCD-SSB symbols overlapping with one or more configured uplink symbols of the TDD uplink-downlink symbol configuration.

In a twenty-third aspect, alone or in combination with the twenty-second aspect, wherein the configuration of the at least one processor to invalidate includes configuration of the at least one processor to: invalidate the plurality of NCD-SSB symbols in response to one NCD-SSB symbol of the plurality ofNCD-SSB symbols overlapping with one configured uplink symbol of the one or more configured uplink symbols.

In a twenty-fourth aspect, alone or in combination with one or more of the twenty-second aspect or the twenty-third aspect, further including configuration of the at least one processor to: validate one or more valid NCD-SSB symbols not overlapping with the one or more configured uplink symbols, wherein the configuration of the at least one processor to invalidate includes configuration of the at least one processor to invalidate the one or more NCD-SSB symbols in response to each of the one or more NCD-SSB symbols overlapping with the one or more configured uplink symbols.

In a twenty-fifth aspect, alone or in combination with one or more of the twenty-second aspect through the twenty-fourth aspect, further including configuration of the at least one processor to: monitor the one or more valid NCD-SSB symbols for a first set of SSB indices; and monitor one or more CD-SSB symbols outside of the RedCap-specific BWP for a second set of SSB indices, wherein the second set of SSB indices correspond to one or more SSB indices associated with the invalidated one or more NCD-SSB symbols.

In a twenty-sixth aspect, alone or in combination with one or more of the twenty-second aspect through the twenty-fifth aspect, wherein the UE includes a RedCap UE having reduced capacity, and wherein the RedCap UE is one of: capable of tuning outside of the RedCap-specific BWP, or incapable of tuning outside of the RedCap-specific BWP.

A twenty-seventh aspect may include a UE including a memory storing processor-readable code; and at least one processor coupled to the memory, the at least one processor configured to execute the processor-readable code to cause the at least one processor to: obtain a PRACH configuration, wherein the PRACH configuration identifies a plurality of RACH occasions within a RACH slot; receive a bandwidth configuration identifying a BWP allocated to the UE within a carrier bandwidth and a configuration for CD-SSB transmissions; receive a NCD-SSB configuration identifying at least a frequency of NCD-SSB transmissions and a time offset of the NCD-SSB transmissions from the CD-SSB transmissions; and invalidate a RACH occasion of the plurality of RACH occasions in response to a collision between the RACH occasion and one of an NCD-SSB symbol of the NCD-SSB transmissions, or a CD-SSB symbol of the CD-SSB transmissions, or a combination of the NCD-SSB symbol and the CD-SSB symbol.

A twenty-eighth aspect, alone or in combination with the twenty-seventh aspect, wherein the invalidating includes invalidating the RACH occasion in response to the collision between the RACH occasion and the NCD-SSB symbol.

In a twenty-ninth aspect, alone or in combination with the twenty-seventh aspect or the twenty-eighth aspect, wherein the BWP includes a RedCap-specific initial BWP and the RACH occasion includes a dedicated RACH occasion within the RedCap-specific initial BWP, and wherein the configuration of the at least one processor to invalidate includes configuration of the at least one processor to one of: invalidate the dedicated RACH occasion in response to the collision between the dedicated RACH occasion and one of the NCD-SSB symbol or the CD-SSB symbol, wherein the UE is capable of tuning outside of the BWP to detect the CD-SSB transmissions, or invalidate the RACH occasion in response to the collision between the RACH occasion and the NCD-SSB symbol.

In a thirtieth aspect, alone or in combination with one or more of the twenty-seventh aspect through the twenty-ninth aspect, wherein the BWP includes a RedCap-specific initial BWP and the RACH occasion includes a common RACH occasion within the carrier bandwidth, and wherein the configuration of the at least one processor to invalidate includes configuration of the at least one processor to invalidate the RACH occasion in response to the collision between the RACH occasion and the CD-SSB symbol.

In a thirty-first aspect, alone or in combination with one or more of the twenty-seventh aspect through the thirtieth aspect, wherein the collision corresponds to one of: the RACH occasion overlapping with the NCD-SSB symbol or the CD-SSB symbol, or the RACH occasion overlapping with spectrum within the BWP of a predefined number of symbols from an end of the one or more of the NCD-SSB symbol or the CD-SSB symbol; or the RACH occasion preceding a location of the NCD-SSB symbols or the CD-SSB symbol within a slot.

In a thirty-second aspect, alone or in combination with one or more of the twenty-seventh aspect through the thirty-first aspect, wherein the UE includes a RedCap UE having reduced capacity, and wherein the RedCap UE is one of: capable of tuning outside of the BWP, or incapable of tuning outside of the BWP.

A thirty-third aspect may include a UE configured for wireless communication including means for obtaining a TDD uplink-downlink symbol configuration, wherein the TDD uplink-downlink symbol configuration identifies a pattern of uplink symbols, downlink symbols, and flexible symbols over one or more slots of a carrier bandwidth; means for receiving a bandwidth configuration identifying a BWP allocated to the UE within the carrier bandwidth and a configuration for CD-SSB transmissions; means for receiving a NCD-SSB configuration identifying at least a frequency of NCD-SSB transmissions and a time offset of the NCD-SSB transmissions from the CD-SSB transmissions; and means for marking a configured flexible symbol of the TDD uplink-downlink symbol configuration as a downlink symbol in response to one or more of an NCD-SSB symbol of the NCD-SSB transmissions or a CD-SSB symbol of the CD-SSB transmissions overlapping with the configured flexible symbol.

In a thirty-fourth aspect, alone or in combination with the thirty-third aspect, wherein the means for marking includes means for marking the configured flexible symbol as the downlink symbol in response to the CD-SSB symbol or the NCD-SSB symbol overlapping with the configured flexible symbol.

In a thirty-fifth aspect, alone or in combination with one or more of the thirty-third aspect or the thirty-fourth aspect, wherein the means for marking includes means for marking the configured flexible symbol as the downlink symbol in response to the NCD-SSB symbol, but not in response to the CD-SSB symbol, overlapping with the configured flexible symbol.

In a thirty-sixth aspect, alone or in combination with one or more of the thirty-third aspect through the thirty-fifth aspect, wherein the means for marking includes means for marking the configured flexible symbol as the downlink symbol in response to the CD-SSB symbol, but not in response to the NCD-SSB symbol, overlapping with the configured flexible symbol.

In a thirty-seventh aspect, alone or in combination with one or more of the thirty-third aspect through the thirty-sixth aspect, wherein the UE includes a RedCap UE having reduced capacity, and wherein the RedCap UE is one of: capable of tuning outside of the BWP, or incapable of tuning outside of the BWP.

A thirty-eighth aspect may include a UE configured for wireless communication including means for obtaining a TDD uplink-downlink symbol configuration, wherein the TDD uplink-downlink symbol configuration identifies a pattern of uplink symbols, downlink symbols, and flexible symbols over one or more slots of a carrier bandwidth; means for receiving a bandwidth configuration identifying a RedCap-specific BWP allocated to the UE within the carrier bandwidth and a configuration for CD-SSB transmissions; means for receiving a NCD-SSB configuration identifying at least a frequency of NCD-SSB transmissions and a time offset of the NCD-SSB transmissions from the CD-SSB transmissions; and means for invalidating one or more NCD-SSB symbols of a plurality of NCD-SSB symbols scheduled according to the NCD-SSB configuration in response to the one or more NCD-SSB symbols overlapping with one or more configured uplink symbols of the TDD uplink-downlink symbol configuration.

In a thirty-ninth aspect, alone or in combination with the thirty-eighth aspect, wherein the means for invalidating includes: means for invalidating the plurality of NCD-SSB symbols in response to one NCD-SSB symbol of the plurality of NCD-SSB symbols overlapping with one configured uplink symbol of the one or more configured uplink symbols.

In a fortieth aspect, alone or in combination with one or more of the thirty-eighth aspect or the thirty-ninth aspect, further including: means for validating one or more valid NCD-SSB symbols not overlapping with the one or more configured uplink symbols, wherein the means for invalidating includes means for invalidating the one or more NCD-SSB symbols in response to each of the one or more NCD-SSB symbols overlapping with the one or more configured uplink symbols.

In a forty-first aspect, alone or in combination with one or more of the thirty-eighth aspect through the fortieth aspect, further including: means for monitoring the one or more valid NCD-SSB symbols for a first set of SSB indices; and means for monitoring one or more CD-SSB symbols outside of the RedCap-specific BWP for a second set of SSB indices, wherein the second set of SSB indices correspond to one or more SSB indices associated with the invalidated one or more NCD-SSB symbols.

In a forty-second aspect, alone or in combination with one or more of the thirty-eighth aspect through the forty-first aspect, wherein the UE includes a RedCap UE having reduced capacity, and wherein the RedCap UE is one of: capable of tuning outside of the RedCap-specific BWP, or incapable of tuning outside of the RedCap-specific BWP.

A forty-third aspect may include a UE configured for wireless communication including means for obtaining a PRACH configuration, wherein the PRACH configuration identifies a plurality of RACH occasions within a RACH slot; means for receiving a bandwidth configuration identifying a BWP allocated to the UE within a carrier bandwidth and a configuration for CD-SSB transmissions; means for receiving a NCD-SSB configuration identifying at least a frequency of NCD-SSB transmissions and a time offset of the NCD-SSB transmissions from the CD-SSB transmissions; and means for invalidating a RACH occasion of the plurality of RACH occasions in response to a collision between the RACH occasion and one of an NCD-SSB symbol of the NCD-SSB transmissions, or a CD-SSB symbol of the CD-SSB transmissions, or a combination of the NCD-SSB symbol and the CD-SSB symbol.

In a forty-fourth aspect, alone or in combination with the forty-third aspect, wherein the means for invalidating includes means for invalidating the RACH occasion in response to the collision between the RACH occasion and the NCD-SSB symbol.

In a forty-fifth aspect, alone or in combination with one or more of the forty-third aspect or the forty-fourth aspect, wherein the BWP includes a RedCap-specific initial BWP and the RACH occasion includes a dedicated RACH occasion within the RedCap-specific initial BWP, and wherein the means for invalidating includes one of: means for invalidating the dedicated RACH occasion in response to the collision between the dedicated RACH occasion and one of the NCD-SSB symbol or the CD-SSB symbol, wherein the UE is capable of tuning outside of the BWP to detect the CD-SSB transmissions, or means for invalidating the RACH occasion in response to the collision between the RACH occasion and the NCD-SSB symbol.

In a forty-sixth aspect, alone or in combination of the one or more of the forty-third aspect through the forty-fifth aspect, wherein the BWP includes a RedCap-specific initial BWP and the RACH occasion includes a common RACH occasion within the carrier bandwidth, and wherein the means for invalidating includes means for invalidating the RACH occasion in response to the collision between the RACH occasion and the CD-SSB symbol.

In a forty-seventh aspect, alone or in combination with one or more of the forty-third aspect through the forty sixth aspect, wherein the collision corresponds to one of: the RACH occasion overlapping with the NCD-SSB symbol or the CD-SSB symbol, or the RACH occasion overlapping with spectrum within the BWP of a predefined number of symbols from an end of the one or more of the NCD-SSB symbol or the CD-SSB symbol; or the RACH occasion preceding a location of the NCD-SSB symbols or the CD-SSB symbol within a slot.

In a forty-eighth aspect, alone or in combination with one or more of the forty-third aspect through the forty-seventh aspect, wherein the UE includes a RedCap UE having reduced capacity, and wherein the RedCap UE is one of: capable of tuning outside of the BWP, or incapable of tuning outside of the BWP.

A forty-ninth aspect may include a non-transitory computer-readable medium storing instructions that, when executed by a processor, cause the processor to perform operations including obtaining a TDD uplink-downlink symbol configuration, wherein the TDD uplink-downlink symbol configuration identifies a pattern of uplink symbols, downlink symbols, and flexible symbols over one or more slots of a carrier bandwidth; receiving a bandwidth configuration identifying a BWP allocated to the UE within the carrier bandwidth and a configuration for CD-SSB transmissions; receiving a NCD-SSB configuration identifying at least a frequency of NCD-SSB transmissions and a time offset of the NCD-SSB transmissions from the CD-SSB transmissions; and marking a configured flexible symbol of the TDD uplink-downlink symbol configuration as a downlink symbol in response to one or more of an NCD-SSB symbol of the NCD-SSB transmissions or a CD-SSB symbol of the CD-SSB transmissions overlapping with the configured flexible symbol.

In a fiftieth aspect, alone or in combination with the forty-ninth aspect, wherein the instructions executed by the processor cause the processor to perform marking includes instructions executed by the processor cause the processor to perform marking the configured flexible symbol as the downlink symbol in response to the CD-SSB symbol or the NCD-SSB symbol overlapping with the configured flexible symbol.

In a fifty-first aspect, alone or in combination with one or more of the forty-ninth aspect or the fiftieth aspect, wherein instructions executed by the processor cause the processor to perform the marking includes instructions executed by the processor cause the processor to perform marking the configured flexible symbol as the downlink symbol in response to the NCD-SSB symbol, but not in response to the CD-SSB symbol, overlapping with the configured flexible symbol.

In a fifty-second aspect, alone or in combination with one or more of the forty-ninth aspect through the fifty-second aspect, wherein the instructions executed by the processor cause the processor to perform marking includes instructions executed by the processor cause the processor to perform marking the configured flexible symbol as the downlink symbol in response to the CD-SSB symbol, but not in response to the NCD-SSB symbol, overlapping with the configured flexible symbol.

In a fifty-third aspect, alone or in combination with one or more of the forty-ninth aspect through the fifty second aspect, wherein the UE includes a RedCap UE having reduced capacity, and wherein the RedCap UE is one of: capable of tuning outside of the BWP, or incapable of tuning outside of the BWP.

A fifty-fourth aspect may include a non-transitory computer-readable medium storing instructions that, when executed by a processor, cause the processor to perform operations including obtaining a TDD uplink-downlink symbol configuration, wherein the TDD uplink-downlink symbol configuration identifies a pattern of uplink symbols, downlink symbols, and flexible symbols over one or more slots of a carrier bandwidth; receiving a bandwidth configuration identifying a RedCap-specific BWP allocated to the UE within the carrier bandwidth and a configuration for CD-SSB transmissions; receiving a NCD-SSB configuration identifying at least a frequency of NCD-SSB transmissions and a time offset of the NCD-SSB transmissions from the CD-SSB transmissions; and invalidating one or more NCD-SSB symbols of a plurality of NCD-SSB symbols scheduled according to the NCD-SSB configuration in response to the one or more NCD-SSB symbols overlapping with one or more configured uplink symbols of the TDD uplink-downlink symbol configuration.

In a fifty-fifth aspect, alone or in combination with the fifty-fourth aspect, wherein the instructions executed by the processor cause the processor to perform invalidating includes instructions executed by the processor cause the processor to perform: invalidating the plurality of NCD-SSB symbols in response to one NCD-SSB symbol of the plurality of NCD-SSB symbols overlapping with one configured uplink symbol of the one or more configured uplink symbols.

In a fifty-sixth aspect, alone or in combination with one or more of the fifty-fourth aspect or the fifty-fifth aspect, further including instructions executed by the processor cause the processor to perform: validating one or more valid NCD-SSB symbols not overlapping with the one or more configured uplink symbols, wherein the instructions executed by the processor cause the processor to perform invalidating includes instructions executed by the processor cause the processor to perform invalidating the one or more NCD-SSB symbols in response to each of the one or more NCD-SSB symbols overlapping with the one or more configured uplink symbols.

In a fifty-seventh aspect, alone or in combination with one or more of the fifty-fourth aspect through the fifty-sixth aspect, further including instructions executed by the processor cause the processor to perform: monitoring the one or more valid NCD-SSB symbols for a first set of SSB indices; and monitoring one or more CD-SSB symbols outside of the RedCap-specific BWP for a second set of SSB indices, wherein the second set of SSB indices correspond to one or more SSB indices associated with the invalidated one or more NCD-SSB symbols.

The fifty-eighth aspect, alone or in combination with one or more of the fifty-fourth aspect through the fifty-seventh aspect, wherein the UE includes a RedCap UE having reduced capacity, and wherein the RedCap UE is one of: capable of tuning outside of the RedCap-specific BWP, or incapable of tuning outside of the RedCap-specific BWP.

A fifty-ninth aspect may include a non-transitory computer-readable medium storing instructions that, when executed by a processor, cause the processor to perform operations including obtaining a PRACH configuration, wherein the PRACH configuration identifies a plurality of RACH occasions within a RACH slot; receiving a bandwidth configuration identifying a BWP allocated to the UE within a carrier bandwidth and a configuration for CD-SSB transmissions; receiving a NCD-SSB configuration identifying at least a frequency of NCD-SSB transmissions and a time offset of the NCD-SSB transmissions from the CD-SSB transmissions; and invalidating a RACH occasion of the plurality of RACH occasions in response to a collision between the RACH occasion and one of an NCD-SSB symbol of the NCD-SSB transmissions, or a CD-SSB symbol of the CD-SSB transmissions, or a combination of the NCD-SSB symbol and the CD-SSB symbol.

In a sixtieth aspect, alone or in combination with the fifty-ninth aspect, wherein the invalidating includes invalidating the RACH occasion in response to the collision between the RACH occasion and the NCD-SSB symbol.

In a sixty-first aspect, alone or in combination with one or more of the fifty-ninth aspect or the sixtieth aspect, wherein the BWP includes a RedCap-specific initial BWP and the RACH occasion includes a dedicated RACH occasion within the RedCap-specific initial BWP, and wherein the instructions executed by the processor cause the processor to perform invalidating includes instructions executed by the processor cause the processor to perform one of: invalidating the dedicated RACH occasion in response to the collision between the dedicated RACH occasion and one of the NCD-SSB symbol or the CD-SSB symbol, wherein the UE is capable of tuning outside of the BWP to detect the CD-SSB transmissions, or invalidating the RACH occasion in response to the collision between the RACH occasion and the NCD-SSB symbol.

In a sixty-second aspect, alone or in combination with one or more of the fifty-ninth aspect through the sixty-first aspect, wherein the BWP includes a RedCap-specific initial BWP and the RACH occasion includes a common RACH occasion within the carrier bandwidth, and wherein the instructions executed by the processor cause the processor to perform invalidating includes instructions executed by the processor cause the processor to perform invalidating the RACH occasion in response to the collision between the RACH occasion and the CD-SSB symbol.

In a sixty-third aspect, alone or in combination with one or more of the fifty-ninth aspect through the sixty-second aspect, wherein the collision corresponds to one of: the RACH occasion overlapping with the NCD-SSB symbol or the CD-SSB symbol, or the RACH occasion overlapping with spectrum within the BWP of a predefined number of symbols from an end of the one or more of the NCD-SSB symbol or the CD-SSB symbol; or the RACH occasion preceding a location of the NCD-SSB symbols or the CD-SSB symbol within a slot.

In a sixty-fourth aspect, alone or in combination with one or more of the fifty-ninth aspect through the sixty-third aspect, wherein the UE includes a RedCap UE having reduced capacity, and wherein the RedCap UE is one of: capable of tuning outside of the BWP, or incapable of tuning outside of the BWP.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Components, the functional blocks, and the modules described herein with respect to FIGs. 1-11 include processors, electronics devices, hardware devices, electronics components, logical circuits, memories, software codes, among other examples, or any combination thereof. Software shall be construed broadly to mean instructions, instruction sets, code, code segments, program code, programs, subprograms, software modules, application, software applications, software packages, routines, subroutines, objects, executables, threads of execution, procedures, and/or functions, among other examples, whether referred to as software, firmware, middleware, microcode, hardware description language or otherwise. In addition, features discussed herein may be implemented via specialized processor circuitry, via executable instructions, or combinations thereof.

Those of skill would further appreciate that the various illustrative logical blocks, modules, circuits, and algorithm steps described in connection with the disclosure herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure. Skilled artisans will also readily recognize that the order or combination of components, methods, or interactions that are described herein are merely examples and that the components, methods, or interactions of the various aspects of the present disclosure may be combined or performed in ways other than those illustrated and described herein.

The various illustrative logics, logical blocks, modules, circuits and algorithm processes described in connection with the implementations disclosed herein may be implemented as electronic hardware, computer software, or combinations of both. The interchangeability of hardware and software has been described generally, in terms of functionality, and illustrated in the various illustrative components, blocks, modules, circuits and processes described above. Whether such functionality is implemented in hardware or software depends upon the particular application and design constraints imposed on the overall system.

The hardware and data processing apparatus used to implement the various illustrative logics, logical blocks, modules and circuits described in connection with the aspects disclosed herein may be implemented or performed with a general purpose single- or multi-chip processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, or, any conventional processor, controller, microcontroller, or state machine. In some implementations, a processor may be implemented as a combination of computing devices, such as a combination of a DSP and a microprocessor, a plurality of microprocessors, one or more microprocessors in conjunction with a DSP core, or any other such configuration. In some implementations, particular processes and methods may be performed by circuitry that is specific to a given function.

In one or more aspects, the functions described may be implemented in hardware, digital electronic circuitry, software, including the structures disclosed in this specification and their structural equivalents thereof, or in any combination thereof. Implementations of the subject matter described in this specification also may be implemented as one or more computer programs, that is one or more modules of computer program instructions, encoded on a computer storage media for execution by, or to control the operation of, data processing apparatus.

If implemented in software, the functions may be stored on or transmitted over as one or more instructions or code on a computer-readable medium. The processes of a method or algorithm disclosed herein may be implemented in a processor-executable software module which may reside on a computer-readable medium. Computer-readable media includes both computer storage media and communication media including any medium that may be enabled to transfer a computer program from one place to another. A storage media may be any available media that may be accessed by a computer. By way of example, and not limitation, such computer-readable media may include random-access memory (RAM), read-only memory (ROM), electrically erasable programmable read-only memory (EEPROM), CD-ROM or other optical disk storage, magnetic disk storage or other magnetic storage devices, or any other medium that may be used to store desired program code in the form of instructions or data structures and that may be accessed by a computer. Also, any connection may be properly termed a computer-readable medium. Disk and disc, as used herein, includes compact disc (CD), laser disc, optical disc, digital versatile disc (DVD), floppy disk, and Blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and instructions on a machine readable medium and computer-readable medium, which may be incorporated into a computer program product.

Various modifications to the implementations described in this disclosure may be readily apparent to those skilled in the art, and the generic principles defined herein may be applied to some other implementations without departing from the spirit or scope of this disclosure. Thus, the claims are not intended to be limited to the implementations shown herein, but are to be accorded the widest scope consistent with this disclosure, the principles and the novel features disclosed herein.

Additionally, a person having ordinary skill in the art will readily appreciate, the terms "upper" and "lower" are sometimes used for ease of describing the figures, and indicate relative positions corresponding to the orientation of the figure on a properly oriented page, and may not reflect the proper orientation of any device as implemented.

Certain features that are described in this specification in the context of separate implementations also may be implemented in combination in a single implementation. Conversely, various features that are described in the context of a single implementation also may be implemented in multiple implementations separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. Further, the drawings may schematically depict one more example processes in the form of a flow diagram. However, other operations that are not depicted may be incorporated in the example processes that are schematically illustrated. For example, one or more additional operations may be performed before, after, simultaneously, or between any of the illustrated operations. In certain circumstances, multitasking and parallel processing may be advantageous. Moreover, the separation of various system components in the implementations described above should not be understood as requiring such separation in all implementations, and it should be understood that the described program components and systems may generally be integrated together in a single software product or packaged into multiple software products. Additionally, some other implementations are within the scope of the following claims. In some cases, the actions recited in the claims may be performed in a different order and still achieve desirable results.

As used herein, including in the claims, the term "or," when used in a list of two or more items, means that any one of the listed items may be employed by itself, or any combination of two or more of the listed items may be employed. For example, if a composition is described as containing components A, B, or C, the composition may contain A alone; B alone; C alone; A and B in combination; A and C in combination; B and C in combination; or A, B, and C in combination. Also, as used herein, including in the claims, "or" as used in a list of items prefaced by "at least one of" indicates a disjunctive list such that, for example, a list of "at least one of A, B, or C" means A or B or C or AB or AC or BC or ABC (that is A and B and C) or any of these in any combination thereof. The term "substantially" is defined as largely but not necessarily wholly what is specified (and includes what is specified; for example, substantially 90 degrees includes 90 degrees and substantially parallel includes parallel), as understood by a person of ordinary skill in the art. In any disclosed implementations, the term "substantially" may be substituted with "within [a percentage] of" what is specified, where the percentage includes .1, 1, 5, or 10 percent.

The previous description of the disclosure is provided to enable any person skilled in the art to make or use the disclosure. Various modifications to the disclosure will be readily apparent to those skilled in the art, and the generic principles defined herein may be applied to other variations without departing from the spirit or scope of the disclosure. Thus, the disclosure is not intended to be limited to the examples and designs described herein but is to be accorded the widest scope consistent with the principles and novel features disclosed herein.
**In the following, further embodiments are described to facilitate the understanding of the invention:**
1. A method of wireless communication performed by a user equipment (UE), the method comprising:
   obtaining a time division duplex (TDD) uplink-downlink symbol configuration, wherein the TDD uplink-downlink symbol configuration identifies a pattern of uplink symbols, downlink symbols, and flexible symbols over one or more slots of a carrier bandwidth;
   receiving a bandwidth configuration identifying a bandwidth part (BWP) allocated to the UE within the carrier bandwidth and a configuration for cell-defining-synchronization signal block (CD-SSB) transmissions;
   receiving a non-cell-defining-synchronization signal block (NCD-SSB) configuration identifying at least a frequency of NCD-SSB transmissions and a time offset of the NCD-SSB transmissions from the CD-SSB transmissions; and
   marking a configured flexible symbol of the TDD uplink-downlink symbol configuration as a downlink symbol in response to one or more of an NCD-SSB symbol of the NCD-SSB transmissions or a CD-SSB symbol of the CD-SSB transmissions overlapping with the configured flexible symbol.
2. The method of embodiment 1, wherein the NCD-SSB is associated with an active BWP of the UE.
3. The method of embodiment 1, wherein the BWP is a reduced capacity (RedCap) specific BWP.
4. The method of embodiment 1,
   wherein the marking includes marking the configured flexible symbol as the downlink symbol in response to the CD-SSB symbol or the NCD-SSB symbol overlapping with the configured flexible symbol.
5. The method of embodiment 1,
   wherein the marking includes marking the configured flexible symbol as the downlink symbol in response to the NCD-SSB symbol, but not in response to the CD-SSB symbol, overlapping with the configured flexible symbol.
6. The method of embodiment 1,
   wherein the marking includes marking the configured flexible symbol as the downlink symbol in response to the CD-SSB symbol, but not in response to the NCD-SSB symbol, overlapping with the configured flexible symbol.
7. The method of embodiment 1, wherein the UE includes a RedCap UE having reduced capacity, and wherein the RedCap UE is one of:
   capable of tuning outside of the BWP, or
   incapable of tuning outside of the BWP.
8. A method of wireless communication performed by a user equipment (UE), the method comprising:
   obtaining a physical random access channel (PRACH) configuration, wherein the PRACH configuration identifies a plurality of random access channel (RACH) occasions within a RACH slot;
   receiving a bandwidth configuration identifying a bandwidth part (BWP) allocated to the UE within a carrier bandwidth and a configuration for cell-defining-synchronization signal block (CD-SSB) transmissions;
   receiving a non-cell-defining-synchronization signal block (NCD-SSB) configuration identifying at least a frequency of NCD-SSB transmissions and a time offset of the NCD-SSB transmissions from the CD-SSB transmissions; and
   invalidating a RACH occasion of the plurality of RACH occasions in response to a collision between the RACH occasion and one of an NCD-SSB symbol of the NCD-SSB transmissions, or a CD-SSB symbol of the CD-SSB transmissions, or a combination of the NCD-SSB symbol and the CD-SSB symbol.
9. The method of embodiment 8, wherein the BWP is associated with an active BWP of the UE.
10. The method of embodiment 8, wherein the BWP is a reduced capacity (RedCap)-specific BWP.
11. The method of embodiment 8, wherein the invalidating includes invalidating the RACH occasion in response to the collision between the RACH occasion and the NCD-SSB symbol.
12. The method of embodiment 8,
   wherein the BWP includes a reduced capacity (RedCap)-specific initial BWP, and
   wherein the invalidating includes one of:
      invalidating the RACH occasion in response to the collision between the RACH occasion and one of the NCD-SSB symbol or the CD-SSB symbol, wherein the UE is capable of tuning outside of the BWP to detect the CD-SSB transmissions, or
      invalidating the RACH occasion in response to the collision between the RACH occasion and the NCD-SSB symbol.
13. The method of embodiment 8, wherein the invalidating includes invalidating the RACH occasion in response to the collision between the RACH occasion and the CD-SSB symbol.
14. The method of embodiment 8, wherein the collision corresponds to one of:
   the RACH occasion overlapping with the NCD-SSB symbol or the CD-SSB symbol, or
   the RACH occasion overlapping with spectrum within the BWP of a predefined number of symbols from an end of the one or more of the NCD-SSB symbol or the CD-SSB symbol; or
   the RACH occasion preceding a location of the NCD-SSB symbol or the CD-SSB symbol within a slot.
15. The method of embodiment 8, wherein the UE includes a RedCap UE having reduced capacity, and wherein the RedCap UE is one of:
   capable of tuning outside of the BWP, or
   incapable of tuning outside of the BWP.
16. A user equipment (UE) comprising:
   a memory storing processor-readable code; and
   at least one processor coupled to the memory, the processor-readable code executable by the at least one processor to cause the UE to:
      obtain a time division duplex (TDD) uplink-downlink symbol configuration, wherein the TDD uplink-downlink symbol configuration identifies a pattern of uplink symbols, downlink symbols, and flexible symbols over one or more slots of a carrier bandwidth;
      receive a bandwidth configuration identifying a bandwidth part (BWP) allocated to the UE within the carrier bandwidth and a configuration for cell-defining-synchronization signal block (CD-SSB) transmissions;
      receive a non-cell-defining-synchronization signal block (NCD-SSB) configuration identifying at least a frequency of NCD-SSB transmissions and a time offset of the NCD-SSB transmissions from the CD-SSB transmissions; and
      mark a configured flexible symbol of the TDD uplink-downlink symbol configuration as a downlink symbol in response to one or more of an NCD-SSB symbol of the NCD-SSB transmissions or a CD-SSB symbol of the CD-SSB transmissions overlapping with the configured flexible symbol.
17. The UE of embodiment 16, wherein the NCD-SSB is associated with an active BWP of the UE.
18. The UE of embodiment 16, wherein the BWP is a reduced capacity (RedCap)-specific BWP.
19. The UE of embodiment 16, wherein the processor-readable code executable by the at least one processor to cause the UE to mark is further executable by the at least one processor to cause the UE to mark the configured flexible symbol as the downlink symbol in response to the CD-SSB symbol or the NCD-SSB symbol overlapping with the configured flexible symbol.
20. The UE of embodiment 16, wherein the processor-readable code executable by the at least one processor to mark includes processor-readable code executable by the at least one processor to mark the configured flexible symbol as the downlink symbol in response to the NCD-SSB symbol, but not in response to the CD-SSB symbol, overlapping with the configured flexible symbol.
21. The UE of embodiment 16, wherein the processor-readable code executable by the at least one processor to mark includes processor-readable code executable by the at least one processor to mark the configured flexible symbol as the downlink symbol in response to the CD-SSB symbol, but not in response to the NCD-SSB symbol, overlapping with the configured flexible symbol.
22. The UE of embodiment 16, wherein the UE includes a RedCap UE having reduced capacity, and wherein the RedCap UE is one of:
   capable of tuning outside of the BWP, or
   incapable of tuning outside of the BWP.
23. A user equipment (UE) comprising:
   a memory storing processor-readable code; and
   at least one processor coupled to the memory, the processor-readable code executable by the at least one processor to cause the UE to:
      obtain a physical random access channel (PRACH) configuration, wherein the PRACH configuration identifies a plurality of random access channel (RACH) occasions within a RACH slot;
      receive a bandwidth configuration identifying a bandwidth part (BWP) allocated to the UE within a carrier bandwidth and a configuration for cell-defining-synchronization signal block (CD-SSB) transmissions;
      receive a non-cell-defining-synchronization signal block (NCD-SSB) configuration identifying at least a frequency of NCD-SSB transmissions and a time offset of the NCD-SSB transmissions from the CD-SSB transmissions; and
      invalidate a RACH occasion of the plurality of RACH occasions in response to a collision between the RACH occasion and one of an NCD-SSB symbol of the NCD-SSB transmissions, or a CD-SSB symbol of the CD-SSB transmissions, or a combination of the NCD-SSB symbol and the CD-SSB symbol.
24. The UE of embodiment 23, wherein the NCD-SSB is associated with an active BWP of the UE.
25. The UE of embodiment 23, wherein the BWP is a reduced capacity (RedCap)-specific BWP.
26. The UE of embodiment 23, wherein the processor-readable code executable by the at least one processor to invalidate includes processor-readable code executable by the at least one processor to invalidate the RACH occasion in response to the collision between the RACH occasion and the NCD-SSB symbol.
27. The UE of embodiment 23,
   wherein the BWP includes a reduced capacity (RedCap)-specific initial BWP, and
   wherein the processor-readable code executable by the at least one processor to invalidate includes processor-readable code executable by the at least one processor to one of:
      invalidate the RACH occasion in response to the collision between the RACH occasion and one of the NCD-SSB symbol or the CD-SSB symbol, wherein the UE is capable of tuning outside of the BWP to detect the CD-SSB transmissions, or
      invalidate the RACH occasion in response to the collision between the RACH occasion and the NCD-SSB symbol.
28. The UE of embodiment 23, wherein the processor-readable code executable by the at least one processor to invalidate includes processor-readable code executable by the at least one processor to invalidate the RACH occasion in response to the collision between the RACH occasion and the CD-SSB symbol.
29. The UE of embodiment 23, wherein the collision corresponds to one of:
   the RACH occasion overlapping with the NCD-SSB symbol or the CD-SSB symbol, or
   the RACH occasion overlapping with spectrum within the BWP of a predefined number of symbols from an end of the one or more of the NCD-SSB symbol or the CD-SSB symbol; or
   the RACH occasion preceding a location of the NCD-SSB symbol or the CD-SSB symbol within a slot.
30. The UE of embodiment 23, wherein the UE includes a RedCap UE having reduced capacity, and wherein the RedCap UE is one of:
   capable of tuning outside of the BWP, or
   incapable of tuning outside of the BWP.

## Claims

1. A method of wireless communication performed by a user equipment, UE, the method comprising:
obtaining (800) a physical random access channel, PRACH, configuration, wherein the PRACH configuration identifies a plurality of random access channel, RACH, occasions within a RACH slot;
receiving (801) a bandwidth configuration identifying a bandwidth part, BWP, allocated to the UE within a carrier bandwidth and a configuration for cell-defining-synchronization signal block, CD-SSB, transmissions;
receiving (802) a non-cell-defining-synchronization signal block, NCD-SSB, configuration identifying at least a frequency of NCD-SSB transmissions and a time offset of the NCD-SSB transmissions from the CD-SSB transmissions; and
invalidating (803) a RACH occasion of the plurality of RACH occasions in response to a collision between the RACH occasion and one of an NCD-SSB symbol of the NCD-SSB transmissions, or a CD-SSB symbol of the CD-SSB transmissions, or a combination of the NCD-SSB symbol and the CD-SSB symbol.

2. The method of claim 1, wherein the BWP is associated with an active BWP of the UE.

3. The method of claim 1, wherein the BWP is a reduced capacity, RedCap,-specific BWP.

4. The method of claim 1, wherein the invalidating includes invalidating the RACH occasion in response to the collision between the RACH occasion and the NCD-SSB symbol.

5. The method of claim 1,
wherein the BWP includes a reduced capacity, RedCap,-specific initial BWP, and wherein the invalidating includes one of:
invalidating the RACH occasion in response to the collision between the RACH occasion and one of the NCD-SSB symbol or the CD-SSB symbol, wherein the UE is capable of tuning outside of the BWP to detect the CD-SSB transmissions, or
invalidating the RACH occasion in response to the collision between the RACH occasion and the NCD-SSB symbol.

6. The method of claim 1, wherein the invalidating includes invalidating the RACH occasion in response to the collision between the RACH occasion and the CD-SSB symbol.

7. The method of claim 1, wherein the collision corresponds to one of:
the RACH occasion overlapping with the NCD-SSB symbol or the CD-SSB symbol, or
the RACH occasion overlapping with spectrum within the BWP of a predefined number of symbols from an end of the one or more of the NCD-SSB symbol or the CD-SSB symbol; or
the RACH occasion preceding a location of the NCD-SSB symbol or the CD-SSB symbol within a slot.

8. A user equipment, UE, comprising:
means for obtaining a physical random access channel, PRACH, configuration, wherein the PRACH configuration identifies a plurality of random access channel, RACH, occasions within a RACH slot;
means for receiving a bandwidth configuration identifying a bandwidth part, BWP, allocated to the UE within a carrier bandwidth and a configuration for cell-defining-synchronization signal block, CD-SSB, transmissions;
means for receiving a non-cell-defining-synchronization signal block, NCD-SSB, configuration identifying at least a frequency of NCD-SSB transmissions and a time offset of the NCD-SSB transmissions from the CD-SSB transmissions; and
means for invalidating a RACH occasion of the plurality of RACH occasions in response to a collision between the RACH occasion and one of an NCD-SSB symbol of the NCD-SSB transmissions, or a CD-SSB symbol of the CD-SSB transmissions, or a combination of the NCD-SSB symbol and the CD-SSB symbol.

9. The UE of claim 8, wherein the BWP is associated with an active BWP of the UE.

10. The UE of claim 8, wherein the BWP is a reduced capacity, RedCap,-specific BWP.

11. The UE of claim 8, wherein the means for invalidating is configured for invalidating the RACH occasion in response to the collision between the RACH occasion and the NCD-SSB symbol.

12. The UE of claim 8,
wherein the BWP includes a reduced capacity, RedCap,-specific initial BWP, and wherein the means for invalidating is configured for at least one of:
invalidating the RACH occasion in response to the collision between the RACH occasion and one of the NCD-SSB symbol or the CD-SSB symbol, wherein the UE is capable of tuning outside of the BWP to detect the CD-SSB transmissions, or
invalidating the RACH occasion in response to the collision between the RACH occasion and the NCD-SSB symbol.

13. The UE of claim 8, wherein the means for invalidating is configured for invalidating the RACH occasion in response to the collision between the RACH occasion and the CD-SSB symbol.

14. The UE of claim 8, wherein the collision corresponds to one of:
the RACH occasion overlapping with the NCD-SSB symbol or the CD-SSB symbol, or
the RACH occasion overlapping with spectrum within the BWP of a predefined number of symbols from an end of the one or more of the NCD-SSB symbol or the CD-SSB symbol; or
the RACH occasion preceding a location of the NCD-SSB symbol or the CD-SSB symbol within a slot.

15. The UE of claim 8, wherein the UE includes a RedCap UE having reduced capacity, and wherein the RedCap UE is one of:
capable of tuning outside of the BWP, or
incapable of tuning outside of the BWP.
